(19) Europäisches Patentamt
European Patent Office
Office européen des brevets

(11) **EP 4 190 441 A1**

(12) **EUROPEAN PATENT APPLICATION**
published in accordance with Art. 153(4) EPC

(43) Date of publication:
**07.06.2023 Bulletin 2023/23**

(21) Application number: **21848678.5**

(22) Date of filing: **29.07.2021**

(51) International Patent Classification (IPC):
**B01J 20/18** (2006.01)  **B01D 53/94** (2006.01)
**B01J 21/06** (2006.01)  **B01J 23/10** (2006.01)
**C01B 39/48** (2006.01)  **F01N 3/24** (2006.01)

(52) Cooperative Patent Classification (CPC):
**B01D 53/94; B01J 20/18; B01J 21/06; B01J 23/10; C01B 39/48; F01N 3/24**

(86) International application number:
**PCT/JP2021/028102**

(87) International publication number:
**WO 2022/025185 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.07.2020 PCT/JP2020/029445**

(71) Applicant: **Mitsui Mining & Smelting Co., Ltd.**
**Shinagawa-ku**
**Tokyo 141-8584 (JP)**

(72) Inventors:
• **GOTO, Hidekazu**
  **Ageo-shi, Saitama 362-0025 (JP)**
• **HAYASHI, Katsuhiko**
  **Ageo-shi, Saitama 362-0021 (JP)**
• **SUWA, Mayuko**
  **Ageo-shi, Saitama 362-0025 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **HYDROCARBON ADSORPTION MATERIAL, EXHAUST GAS CLEANING CATALYST, AND EXHAUST GAS CLEANING SYSTEM**

(57)    Provided are a hydrocarbon adsorbent, an exhaust gas purifying catalyst, and an exhaust gas purifying system, which are capable of adsorbing hydrocarbons, storing the adsorbed hydrocarbons up to a relatively high temperature, and desorbing the adsorbed and stored hydrocarbons at a relatively high temperature.

The hydrocarbon adsorbent contains a multipore zeolite containing, outside the zeolite framework, at least one metal selected from the group consisting of transition metals belonging to Groups 3 to 12 in the periodic table, amphoteric metals belonging to Groups 13 and 14 in the periodic table, alkali metals, and alkaline earth metals; and has a content ratio of the metal of 9% by mass or less relative to the multipore zeolite containing the metal.

[FIG. 2]

**Description**

**TECHNICAL FIELD**

The present invention relates to a hydrocarbon adsorbent, an exhaust gas purifying catalyst, and an exhaust gas purifying system, which are capable of adsorbing and storing hydrocarbons in exhaust gases emitted from internal combustion engines of automobiles and other vehicles.

**BACKGROUND ART**

Exhaust gases emitted from internal combustion engines of automobiles and other vehicles using gasoline as fuel contain harmful components such as hydrocarbons (HC) caused by unburned fuel, carbon monoxide (CO) caused by incomplete combustion, and nitrogen oxides (NOx) caused by excessive combustion temperature. In order to treat such exhaust gases emitted from the internal combustion engines, exhaust gas purifying catalysts are used. In such exhaust gas purifying catalysts, for example, hydrocarbons (HC) are oxidized and converted into water and carbon dioxide ($CO_2$), carbon monoxide (CO) is oxidized and converted into $CO_2$, and nitrogen oxide (NOx) is reduced and converted into nitrogen for purification. For such exhaust gas purifying catalysts, for example, platinum group metals are used, and in particular, platinum group metals such as platinum (Pt), palladium (Pd), and rhodium (Rh) are used. Also, for the exhaust gas purifying catalysts, a hydrocarbon adsorbent having a property of adsorbing and storing hydrocarbons in the exhaust gases is used as a constituent component.

Such exhaust gas purifying catalysts are known to be relatively inefficient in treating exhaust gases in low temperature environments such as in cold-start conditions of internal combustion engines. Patent Literature 1 discloses a cold-start catalyst including a zeolite catalyst containing a base metal, a precious metal, and a zeolite, and a supported platinum group metal catalyst containing one or more platinum group metals and one or more inorganic oxide carriers in order to improve the efficiency of exhaust gas purification in cold-start conditions. Patent Literature 1 also discloses zeolites contained in the cold-start catalyst, such as a BEA-type zeolite, an MFI-type zeolite, and a CHA-type zeolite.

**CITATION LIST**

PATENT LITERATURE

Patent Literature 1: Japanese Translation of PCT International Application Publication No. 2014-519975

**SUMMARY OF THE INVENTION**

PROBLEM TO BE SOLVED BY THE INVENTION

The cold-start catalyst disclosed in Patent Literature 1 stores hydrocarbons in a cold-start state and then desorbs the stored hydrocarbons before the catalyst is sufficiently activated when the catalyst is warmed by the inflow of high temperature exhaust gas, and thus the hydrocarbons may be emitted without being purified. Therefore, the hydrocarbon adsorbent is required to have a performance capable of adsorbing and storing hydrocarbons up to a temperature sufficient to activate the catalyst, and desorbing the adsorbed and stored hydrocarbons at the temperature at which the catalyst is activated. The exhaust gas purifying catalyst is also required to have a hydrocarbon adsorbent using a zeolite with high heat resistance since it is exposed to high temperature exhaust gas.

Accordingly, an object of the present invention is to provide a hydrocarbon adsorbent, an exhaust gas purifying catalyst, and an exhaust gas purifying system, which are capable of adsorbing hydrocarbons, storing the adsorbed hydrocarbons up to a relatively high temperature, and desorbing the hydrocarbons at a relatively high temperature, and have excellent heat resistance.

MEANS FOR SOLVING PROBLEM

The present invention provides a hydrocarbon adsorbent including a multipore zeolite containing at least one metal selected from the group consisting of transition metals belonging to Groups 3 to 12 in the periodic table, amphoteric metals belonging to Groups 13 and 14 in the periodic table, alkali metals, and alkaline earth metals outside the zeolite framework, wherein the hydrocarbon adsorbent has a content ratio of the metal of 9% by mass or less relative to the multipore zeolite containing the metal.

The present invention also provides an exhaust gas purifying catalyst including a substrate, a hydrocarbon adsorption portion containing the hydrocarbon adsorbent on the substrate, and a purifying catalyst portion on the hydrocarbon adsorption portion.

The present invention also provides an exhaust gas purifying catalyst including a substrate, a hydrocarbon adsorption portion containing the hydrocarbon adsorbent and Rh on the substrate, and a purifying catalyst portion containing Pd on the hydrocarbon adsorption portion.

The present invention also provides an exhaust gas purifying system including an internal combustion engine, a first exhaust gas purifying catalyst provided upstream in an exhaust gas flow passage connected to the internal combustion engine, and a second exhaust gas purifying catalyst provided downstream from the first exhaust gas purifying catalyst in the exhaust gas flow direction in the exhaust gas flow passage, wherein the second exhaust gas purifying catalyst is the above-mentioned exhaust gas purifying catalyst, and the second exhaust gas purifying catalyst has a content ratio of platinum group metals in a range of 0.1 g/L or more and 3.0 g/L or less relative to the volume of the second exhaust gas purifying catalyst.

The present invention also provides an exhaust gas purifying system including an internal combustion engine and a single exhaust gas purifying catalyst provided in an exhaust gas flow passage connected to the internal combustion engine, wherein the single exhaust gas purifying catalyst is the above-mentioned exhaust gas purifying catalyst.

The present invention also provides an exhaust gas purifying system including an internal combustion engine and a plurality of exhaust gas purifying catalysts provided in an exhaust gas flow passage connected to the internal combustion engine, wherein among the plurality of exhaust gas purifying catalysts, a first exhaust gas purifying catalyst arranged most upstream in the exhaust gas flow direction is the above-mentioned exhaust gas purifying catalyst.

The present invention also provides a method for treating an exhaust gas including bringing a combustion exhaust gas containing hydrocarbons into contact with the exhaust gas purifying catalyst to adsorb the hydrocarbons to the exhaust gas purifying catalyst, and desorbing the hydrocarbons from the exhaust gas purifying catalyst at a temperature of 170°C or higher. When water is contained in the combustion exhaust gas, hydrocarbons are repeatedly adsorbed, desorbed, and reabsorbed on the exhaust gas purifying catalyst at a temperature of 200°C or lower. Therefore, the adsorption and desorption behavior of hydrocarbons tends to be complicated. Even when water is contained in the combustion exhaust gas, if the temperature is 170°C or lower, hydrocarbons can be adsorbed or desorbed on the exhaust gas purifying catalyst without re-adsorbing the hydrocarbons to the exhaust gas purifying catalyst. By using a temperature of 170°C or lower as a reference, it is possible to evaluate the adsorption or desorption of hydrocarbons on the exhaust gas purifying catalyst without considering the re-adsorption of hydrocarbons on the exhaust gas purifying catalyst, even when water is contained in the combustion exhaust gas. The present invention provides a method for treating an exhaust gas capable of adsorbing and storing hydrocarbons until activation, with reference to a temperature of 170°C or lower, and desorbing the adsorbed hydrocarbons for purification after the activation.

EFFECT OF THE INVENTION

The hydrocarbon adsorbent provided by the present invention includes a multipore zeolite containing specific metals outside the zeolite framework, and is capable of adsorbing and storing hydrocarbons up to a relatively high temperature, and desorbing the stored hydrocarbons at a high temperature of, for example, 170°C or higher. The hydrocarbon adsorbent also has excellent heat resistance, and in an exhaust gas purifying catalyst using the hydrocarbon adsorbent and an exhaust gas purifying system including the exhaust gas purifying catalyst, the removal performance of hydrocarbons can be improved.

BRIEF DESCRIPTION OF DRAWINGS

FIG. 1 is a schematic perspective view of an exhaust gas purifying catalyst.
FIG. 2 shows a first example of an exhaust gas purifying catalyst, which is an enlarged view of a part of the cross section.
FIG. 3 shows a second example of an exhaust gas purifying catalyst, which is an enlarged view of a part of the cross section.
FIG. 4 is a schematic configuration diagram of a first example of an exhaust gas purifying system.
FIG. 5 is a schematic configuration diagram of a second example of an exhaust gas purifying system.
FIG. 6 is a schematic configuration diagram of a third example of an exhaust gas purifying system.
FIG. 7 shows an X-ray diffraction spectrum of an MSE-type zeolite to be obtained.
FIG. 8 shows an X-ray diffraction spectrum of an EON-type zeolite to be obtained.

**MODE(S) FOR CARRYING OUT THE INVENTION**

Next, the present invention will be described based on exemplary embodiments. However, the present invention is not limited to the embodiments described below.

An example of the embodiments of the present invention is a hydrocarbon adsorbent including a multipore zeolite containing at least one metal selected from the group consisting of transition metals belonging to Groups 3 to 12 in the periodic table, amphoteric metals belonging to Groups 13 and 14 in the periodic table, alkali metals, and alkaline earth metals outside the zeolite framework, in which the content ratio of the metal is 9% by mass or less relative to the multipore zeolite containing the metal. By including a multipore zeolite containing at least one metal selected from the group consisting of transition metals belonging to Groups 3 to 12 in the periodic table, amphoteric metals belonging to Groups 13 and 14 in the periodic table, alkali metals, and alkaline earth metals outside the zeolite framework, the hydrocarbon adsorbent is capable of adsorbing hydrocarbons at a relatively low temperature of, for example, 50°C, storing the hydrocarbons up to a relatively high temperature of, for example, 200°C, and desorbing the stored hydrocarbons at a relatively high temperature of, for example, higher than 200°C. In the case where water is contained in the exhaust gas, the hydrocarbon adsorbent is also capable of storing the hydrocarbons up to a relatively high temperature of 170°C, which is a temperature at which among the adsorption, desorption and re-adsorption of the hydrocarbons performed by the hydrocarbon adsorbent, the adsorption and desorption of the hydrocarbons can be evaluated without considering the re-adsorption, and desorbing the stored hydrocarbons at a temperature of higher than 170°C.

Zeolites have a crystalline or quasi-crystalline aluminosilicate crystal structure composed of repeating units of $SiO_4$ and $AlO_4$ tetrahedrons. The units that form the framework structure of zeolites may be described as $TO_4$ units. The framework structure of zeolites is given a structural code of three uppercase letters of the alphabet defined by the International Zeolite Association. This structure can be confirmed according to the Database of Zeolite Structures by the Structure Commission of the International Zeolite Association.

The multipore zeolite is a zeolite having multiple types of pore structures with different sizes. Examples of the multipore zeolite used in the embodiments of the present invention include a zeolite containing large pore tunnel-type pores and small pore cages as the pore structure. Tunnel-type pores may also be referred to as linear-type pores, and may be described as "tunnel-type (linear-type) pores" in the present specification. The multipore zeolite may further contain large pore cages. Examples of the large pore tunnel-type (linear-type) pores include tunnel-type (linear-type) pores having a ring with a 10 or more-membered ring, such as tunnel-type (linear-type) pores with a maximum 12-membered ring and tunnel-type (linear-type) pores with a maximum 10-membered ring. Examples of the large pore cages include cages having a ring with a 10 or more-membered ring, such as cages with a maximum 10-membered ring. Examples of the small pore cages include cages having a maximum ring with an 8 or less-membered ring, such as cages with a maximum 8-membered ring and cages with a maximum 6-membered ring. Examples of the multipore zeolite used in the embodiments of the present invention include MSE-type zeolites having tunnel-type (linear-type) pores with a maximum 12-membered ring, cages with a maximum 10-membered ring, and cages with a maximum 6-membered ring (cages composed of 6- and 4-membered rings), EON-type zeolites having tunnel-type (linear-type) pores with a maximum 12-membered ring, and cages with a maximum 8-membered ring (cages composed of 8-, 6-, and 4-membered rings), and MOR-type zeolites having tunnel-type (linear-type) pores with a maximum 12-membered ring, and cages with a maximum 8-membered ring. Among them, MSE-type zeolites having tunnel-type (linear-type) pores with a maximum 12-membered ring, cages with a maximum 10-membered ring, and cages with a maximum 6-membered ring, and EON-type zeolites having tunnel-type (linear-type) pores with a maximum 12-membered ring, and cages with a maximum 8-membered ring are preferred; and the MSE-type zeolites are particularly preferred. BEA-type zeolites having only tunnel-type (linear-type) pores with a maximum 12-membered ring, and MFI-type zeolites having only tunnel-type (linear-type) pores with a maximum 10-membered ring are not applicable to multipore zeolites since they have only one type of pore structure.

MSE-type zeolites have tunnel-type (linear-type) pores with a maximum 12-membered ring, cages with a maximum 10-membered ring, and cages with a maximum 6-membered ring (cages composed of 6- and 4-membered rings). The crystal structure of typical MSE-type zeolites belongs to the tetragonal, $P4_2/mnm$ space group. The space group may change when the MSE-type zeolites are modified with metal ions. Typical MSE-type zeolites have a lattice constant a, which indicates the length of the axis of the unit lattice, of 18.2461 angstroms (a = 18.2461 Å), a lattice constant b of 18.2461 angstroms (b = 18.2461 Å), a lattice constant c of 20.5569 angstroms (c = 20.5569 Å), and $\alpha$, $\beta$, and $\gamma$, which indicate the angles between the axes of the unit lattice, of 90° ($\alpha$ = 90.000°, $\beta$ = 90.000°, and $\gamma$ = 90.000°) respectively. The crystal structure of the zeolites can be referred to the Database of Zeolite Structures by the Structure Commission of the International Zeolite Association.

EON-type zeolites have tunnel-type (linear-type) pores with a maximum 12-membered ring, and cages with a maximum 8-membered ring (cages composed of 8-, 6-, and 4-membered rings). The crystal structure of typical EON-type zeolites belongs to the orthorhombic, Pmmn space group. The space group may change when the EON-type zeolites are modified with metal ions. Typical EON-type zeolites have a lattice constant a, which indicates the length of the axis of the unit lattice, of 7.5709 angstroms (a = 7.5709 Å), a lattice constant b of 18.1480 angstroms (b = 18.1480 Å), a lattice constant c of 25.9324 angstroms (c = 25.9324 Å), and $\alpha$, $\beta$, and $\gamma$, which indicate the angles between the axes of the unit lattice, of 90° ($\alpha$ = 90.000°, $\beta$ = 90.000°, and $\gamma$ = 90.000°) respectively.

The multipore zeolite preferably has a $SiO_2/Al_2O_3$ molar ratio of 10 or more and 600 or less. The $SiO_2/Al_2O_3$ molar ratio in the multipore zeolite may be 12 or more, may be 15 or more, may be 18 or more, and may be 20 or more; and may be 500 or less, may be 400 or less, may be 300 or less, and may be 250 or less. The $SiO_2/Al_2O_3$ molar ratio in the multipore zeolite is more preferably 12 or more and 500 or less, even more preferably 13 or more and 400 or less, and particularly preferably 15 or more and 250 or less. When the $SiO_2/Al_2O_3$ molar ratio in the multipore zeolite is 10 or more, the multipore zeolite has a stable crystal structure and excellent heat resistance. When the $SiO_2/Al_2O_3$ molar ratio in the multipore zeolite is 600 or less, at least one metal ion selected from the group consisting of transition metals belonging to Groups 3 to 12 in the periodic table, amphoteric metals belonging to Groups 13 and 14 in the periodic table, alkali metals, and alkaline earth metals is easily ion-exchanged with a group containing oxygen atoms serving as a Bronsted acid site adjacent to Al atoms in the multipore zeolite, and is contained outside the zeolite framework. The molar ratio of $SiO_2/Al_2O_3$ contained in the multipore zeolite or the hydrocarbon adsorbent described later can be determined by measuring the Si amount and the Al amount by elemental analysis using, for example, a scanning fluorescent X-ray analyzer (ZSX Primus II, manufactured by Rigaku Corp.), and calculating the $SiO_2/Al_2O_3$ molar ratio from the measured Si and Al amounts.

The multipore zeolite according to an example of the embodiments of the present invention contains at least one metal selected from the group consisting of transition metals belonging to Groups 3 to 12 in the periodic table, amphoteric metals belonging to Groups 13 and 14 in the periodic table, alkali metals, and alkaline earth metals outside the zeolite framework. The metal is preferably introduced by ion exchange for the multipore zeolite, and may be modified as an oxide for the multipore zeolite. The metal to be introduced by ion exchange and the metal to be modified as an oxide may be mixed. When the multipore zeolite is ion-exchanged with ions of the metal, cations present in the pores of the multipore zeolite function as an acid site, thereby chemisorbing hydrocarbons. Metal ion exchange for the multipore zeolite exchanged with ammonium ions, which are basic, minimizes the formation of protons ($H^+$), and ion exchange for the multipore zeolite at a high pH value of 4 or more suppresses the formation of hydroxyl groups of the zeolite framework, resulting in that the multipore zeolite is capable of preferentially adsorbing hydrocarbons at a relatively low temperature of, for example, 50°C, storing the hydrocarbons up to a relatively high temperature of, for example, 200°C or higher, and desorbing the hydrocarbons at a relatively high temperature of, for example, higher than 200°C. In the case where water is contained in the exhaust gas, by containing at least one metal selected from the group consisting of transition metals belonging to Groups 3 to 12 in the periodic table, amphoteric metals belonging to Groups 13 and 14 in the periodic table, alkali metals, and alkaline earth metals outside the zeolite framework, the multipore zeolite is also capable of storing hydrocarbons up to a relatively high temperature of 170°C, which is a temperature at which among the adsorption, desorption, and re-adsorption of the hydrocarbons, the adsorption and desorption of the hydrocarbons can be evaluated without considering the re-adsorption, and desorbing the stored hydrocarbons at a temperature of higher than 170°C.

In the multipore zeolite, the ion exchange site in the zeolite pores may be ion-exchanged with at least one metal selected from the group consisting of transition metals belonging to Groups 3 to 12 in the periodic table, amphoteric metals belonging to Groups 13 and 14 in the periodic table, alkali metals, and alkaline earth metals. The term "ion exchange site in the zeolite pores" specifically means a group containing oxygen atoms serving as a Bronsted acid site adjacent to Al atoms that are part of the T site constituting the framework. That is, the multipore zeolite is ion-exchanged at the Bronsted acid site of repeating units of $SiO_4$ and $AlO_4$ tetrahedrons constituting the framework of the zeolite, and contains a specific metal outside the zeolite framework. The ion exchange site in the multipore zeolite is ion-exchanged with a metal, and the presence of the metal outside the zeolite framework allows hydrocarbons to be preferentially adsorbed, thereby improving the adsorption capacity for hydrocarbons.

The content ratio of the at least one metal selected from the group consisting of transition metals belonging to Groups 3 to 12 in the periodic table, amphoteric metals belonging to Groups 13 and 14 in the periodic table, alkali metals, and alkaline earth metals, which is contained outside the zeolite framework of the multipore zeolite, is 9% by mass or less, preferably 8% by mass or less, and more preferably 7% by mass or less; and may be 1% by mass or more, preferably 1.2% by mass or more, and more preferably 1.5% by mass or more, relative to the multipore zeolite containing the metal. When the content ratio of the specific metal contained in the multipore zeolite is 9% by mass or less, it is possible to suppress deterioration in the heat resistance of the multipore zeolite containing the metal. In particular, when the specific metal is introduced in a manner to replace Si in the multipore zeolite framework and the metal content increases, the heat resistance of the multipore zeolite tends to decrease, which is unpreferable. When the multipore zeolite contains a plurality of specific metals, the metal content ratio means the total of the plurality of specific metals.

The transition metals belonging to Groups 3 to 12 in the periodic table, which are contained in the multipore zeolite, include at least one element selected from the group consisting of iron (Fe), palladium (Pd), rhodium (Rh), platinum (Pt), manganese (Mn), nickel (Ni), zinc (Zn), silver (Ag), copper (Cu), titanium (Ti), vanadium (V), chromium (Cr), cobalt (Co), zirconium (Zr), niobium (Nb), molybdenum (Mo), technetium (Tc), and ruthenium (Ru). In the present specification, the transition metals also include Group 12 metals in the periodic table. The amphoteric metals belonging to Groups 13 and 14 in the periodic table, which are contained in the multipore zeolite, include at least one element selected from the group consisting of aluminum (Al), gallium (Ga), indium (In), thallium (Tl), germanium (Ge), tin (Sn), and lead (Pb). The amphoteric metals belonging to Groups 13 and 14 in the periodic table, which are contained outside the zeolite framework, may include no aluminum (Al), and the amphoteric metals belonging to Groups 13 and 14 in the periodic table, which are contained outside the zeolite framework, may include at least one element selected from the group consisting of gallium (Ga), indium (In), thallium (Tl), germanium (Ge), tin (Sn), and lead (Pb). The alkali metals contained in the multipore zeolite preferably include at least one ion selected from the group consisting of lithium (Li), sodium (Na), potassium (K), rubidium (Rb), and cesium (Cs). The alkaline earth metals contained in the multipore zeolite preferably include at least one selected from the group consisting of calcium (Ca), strontium (Sr), and barium (Ba). The metals contained in the multipore zeolite may include at least one selected from the group consisting of Fe, Pd, Rh, Pt, Mn, Ni, Zn, Ag, Cu, Ti, V, Cr, Co, Zr, Nb, Mo, Tc, Ru, Al, Ga, In, Tl, Ge, Sn, Pb, Li, Na, K, Rb, Cs, Ca, Sr, and Ba. The multipore zeolite may also contain magnesium (Mg).

It is more preferred that the metals contained outside the zeolite framework of the multipore zeolite include at least one selected from the group consisting of Mn, Fe, Ni, Cu, Zn, Ga, Rh, Pd, Ag, Sn, Sc, and Pt. When the ion exchange site in the multipore zeolite is ion-exchanged with at least one metal selected from the group consisting of Mn, Fe, Ni, Cu, Zn, Ga, Rh, Pd, Ag, Sn, Sc, and Pt, hydrocarbons stably adsorbed in the pores can be further stably present by chemisorption on the metal, thereby storing the hydrocarbons up to a higher temperature. The ion exchange site in the multipore zeolite may be ion-exchanged with hydrogen ions in addition to the metal ions.

It is preferred that the multipore zeolite contains at least one metal selected from the group consisting of transition metals belonging to Groups 3 to 12 in the periodic table, amphoteric metals belonging to Groups 13 and 14 in the periodic table, alkali metals, and alkaline earth metals outside the zeolite framework such that the metal/Al ratio, which is a molar ratio of the metal to Al contained outside the zeolite framework of the multipore zeolite, is in a range of 0.01 or more and 2.5 or less. In the case where the multipore zeolite contains multiple metal species ($M_{x1}$, $M_{x2}$, ...), it is also preferred to contain the metals ($M_{x1}$, $M_{x2}$, ...) such that the total value of the molar ratios of the metals to Al ($M_{x1}/Al + M_{x2}/Al + ...$) is in a range of 0.01 or more and 2.5 or less. It is preferred that the metal/Al ratio, which is a molar ratio of the metal to Al contained outside the zeolite framework of the multipore zeolite, is in a range of 0.01 or more and 2.5 or less because of the stability of the zeolite structure. It is more preferred that the metal/Al ratio, which is a molar ratio of the metal to Al contained outside the zeolite framework of the multipore zeolite, is in a range of 0.05 or more and 2.5 or less because of the excellent hydrocarbon (HC) adsorption performance. The amounts of the element M and Al contained in the multipore zeolite or the exhaust gas purifying composition described later can be measured by elemental analysis using, for example, a scanning fluorescent X-ray analyzer (ZSX Primus II, manufactured by Rigaku Corp.).

The multipore zeolite may contain phosphorus or sulfur, and preferably contains phosphorus. When the multipore zeolite contains phosphorus or sulfur, the portion that causes defects in the framework structure is likely to be modified with phosphorus or sulfur, and when the portion that causes defects in the framework structure is modified with phosphorus or sulfur, the framework structure of the multipore zeolite can be maintained even when subjected to severe thermal environments, thereby improving the heat resistance. Phosphorus or sulfur generated from a phosphorus source or a sulfur source is in the form of, for example, phosphate ions or sulfate ions, which is more likely to be bonded to a Lewis acid site, which is a metal ion, than to a Bronsted acid site. The multipore zeolite maintains a Bronsted acid site serving as an active site for oxidation of hydrocarbons (HC) to be adsorbed, and the metal ions that cause defects in the framework structure are bonded with phosphate ions or sulfate ions and the like to maintain the framework structure, so that the multipore zeolite maintains the framework structure even when subjected to severe thermal environments, thereby improving the heat resistance while maintaining the purification performance for hydrocarbons.

In the case where the multipore zeolite contains phosphorus, the P/Al molar ratio, which is a molar ratio of phosphorus to aluminum in the phosphorus-containing multipore zeolite, is preferably in a range of 0.4 or more and 1.1 or less. The P/Al molar ratio is more preferably in a range of 0.8 or more and 1.0 or less. When the P/Al molar ratio, which is a molar ratio of phosphorus (P) to Al as the T atoms (central atoms) of the $TO_4$ units forming the framework structure of the multipore zeolite, falls within the range of 0.4 or more and 1.1 or less, the Lewis acid site formed by Al is modified with phosphorus contained in the multipore zeolite, and the Bronsted acid site serving as an active site for oxidation of adsorbed hydrocarbons (HC) is maintained, so that the multipore zeolite suppresses the defects in the framework structure, and maintains the framework structure even when subjected to severe thermal environments to further improve the heat resistance, while maintaining the purification performance. When the P/Al molar ratio in the phosphorus-containing multipore zeolite falls within the range of 0.4 or more and 1.1 or less, the defects in the framework structure can be suppressed to maintain the adsorption performance and purification performance for hydrocarbons. The amounts of aluminum (Al) and phosphorus (P) in the phosphorus-containing multipore zeolite can be measured using a scanning fluorescent X-ray analyzer (such as the one manufactured by Rigaku Corp.) as in the method of Examples described later, and the molar ratio can be calculated from the measured values.

The multipore zeolite preferably has a BET specific surface area A in a range of 400 m²/g or more and 1,000

$m^2/g$ or less. When the BET specific surface area of the multipore zeolite falls within the range of 400 $m^2/g$ or more and 1,000 $m^2/g$ or less, the hydrocarbon adsorption amount per unit weight of the multipore zeolite is increased, and thus the adsorption performance for hydrocarbons (HC) is improved. The BET specific surface area of the multipore zeolite is more preferably 450 $m^2/g$ or more. In order to maintain the framework structure even when subjected to severe thermal environments, the BET specific surface area of the multipore zeolite is preferably 800 $m^2/g$ or less, may be 700 $m^2/g$ or less, and may be 600 $m^2/g$ or less.

The multipore zeolite preferably has a ratio B/A of a BET specific surface area B of the multipore zeolite after being heat-treated with the following heat treatment conditions (1) to (5) to a BET specific surface area A of the multipore zeolite before being heat-treated, in a range of 0.35 or more and 1 or less. When the ratio B/A of the BET specific surface area B of the multipore zeolite after being heat-treated to the BET specific surface area A of the multipore zeolite before being heat-treated is 1, the structure of the multipore zeolite does not change before and after the heat treatment, meaning that the structure is maintained. When the ratio B/A of the BET specific surface areas of the multipore zeolite before and after the heat treatment falls within the range of 0.35 or more and 1 or less, the micropore structure can be relatively maintained even when subjected to severe thermal environments, which is preferable. The ratio B/A of the specific surface areas of the multipore zeolite before and after the heat treatment is more preferably in a range of 0.4 or more and 1 or less, more preferably in a range of 0.3 or more and 1 or less, even more preferably 0.5 or more and 1 or less, and particularly preferably 0.5 or more and 0.9 or less. Heat Treatment Conditions:

(1) Temperature: 850°C;
(2) Time period: 25 hours;
(3) Atmosphere: An atmospheric atmosphere containing 10% by volume of water vapor ($H_2O$), which is prepared by evaporating water vapor from a tank containing water and adjusting saturated water vapor pressure with temperature;
(4) Model gas flow mode: The following model gas (5) flows at 3 L/min for 80 seconds and air flows at 3 L/min for 20 seconds, alternately; and
(5) Model gas: The total of $C_3H_6$, $O_2$, and $N_2$ is 3 L/min, $C_3H_6$ is 70 mL/min, $O_2$ is 70 mL/min, and the balance is nitrogen ($N_2$).

Among multipore zeolites, the MSE-type zeolite has a diffraction peak at a diffraction angle (2θ) position of 21.7° ± 1.0°, which represents the diffraction index (420) in the X-ray diffraction spectrum of the MSE-type zeolite, and preferably has a ratio D/C of a peak intensity D of the diffraction index (420) after heat treatment, which satisfies the following heat treatment conditions (1) to (5), to a peak intensity C of the diffraction index (420) before the heat treatment, in a range of 0.3 or more and 1.5 or less. When the peak intensity ratio D/C of the peak intensity D appearing at a diffraction angle (2θ) position of 21.7° ± 1.0°, which represents the diffraction index (420) in the X-ray diffraction spectrum of the MSE-type zeolite, after the heat treatment, to the peak intensity C before the heat treatment falls within the range of 0.3 or more and 1.5 or less, the framework structure can be maintained even when subjected to severe thermal environments, which is preferable. The peak intensity ratio D/C is more preferably in a range of 0.4 or more and 1.4 or less, even more preferably in a range of 0.5 or more and 1.3 or less, and still more preferably in a range of 0.6 or more and 1.2 or less. The X-ray diffraction spectrum of the MSE-type zeolite can be measured using an X-ray diffractometer (such as model number: MiniFlex600, manufactured by Rigaku Corp.).

Method for Producing MSE-Type Zeolite

The method for producing an MSE-type zeolite includes a step of preparing a raw material mixture containing a silica source, an aluminum source, an alkali metal source, an organic structure-directing agent (template), and water, and a step of heating and crystallizing the raw material mixture to obtain an MSE-type zeolite.

The silica source can use, for example, a silicon-containing compound. Specific examples thereof include wet-process silica, dry-process silica, colloidal silica, sodium silicate, potassium silicate, and aluminosilicate gel. The silica source can be used singly or in combination of two or more types thereof. Among these silica sources, it is preferable to use silica (silicon dioxide), aluminosilicate gel, or colloidal silica since the by-products are less likely to be generated and the desired MSE-type zeolite can be produced.

The aluminum source can use, for example, a water-soluble aluminumcontaining compound. Specific examples thereof include sodium aluminate, aluminum nitrate, aluminum sulfate, aluminum hydroxide, and aluminosilicate gel. The aluminum source can be used singly or in combination of two or more types thereof. Among these aluminum sources, it is preferable to use sodium aluminate or aluminosilicate gel since the by-products are less likely to be generated and the desired MSE-type zeolite can be produced.

The alkali metal source can use, for example, cesium hydroxide, potassium hydroxide, and sodium hydroxide. When sodium silicate is used as the silica source or sodium aluminate is used as the aluminum source, sodium, which is an alkali metal component contained therein, is also an alkali metal component. The alkali metal source is considered as the sum of all alkali metal components in the reaction mixture.

The organic structure-directing agent includes those containing N,N,N',N'-tetraalkylbicyclo[2.2.2]oct-7-ene-2,3:5,6-dipyrrolidinium ions. The organic structure-directing agent may be N,N,N',N'-tetraalkylbicyclo[2.2.2]oct-7-ene-2,3:5,6-dipyrrolidinium iodide, and the alkyl groups may be the same or different.

Step of Preparing Raw Material Mixture

The order of addition of each raw material in preparing a raw material mixture is determined by applying a method that facilitates obtaining a uniformly mixed raw material mixture. For example, a uniformly mixed raw material mixture can be obtained by adding an aluminum source to an alkali metal source acting as a mineralizing agent to be dissolved at room temperature, adding a silica source thereto, and then stirring and mixing the materials. The temperature at which the raw material mixture is prepared can generally be room temperature (20°C to 25°C).

Step of Crystallizing

The raw material mixture can be crystallized by heating at a temperature of 70°C or higher and 240°C or lower. The heating performed on the raw material mixture is also referred to as a first heating. The first heating may be performed in a state where the raw material mixture is allowed to stand, or may be performed while stirring the raw material mixture. The heating temperature may be a temperature of 80°C or higher and 200°C or lower. The heating time may be 5 hours or more and 400 hours or less, may be 48 hours or more and 200 hours or less, and may be 72 hours or more and 80 hours or less. The heating may be performed under atmospheric pressure, and may be performed under pressure.

The raw material mixture may be allowed to stand, before heating, for a certain period of time at a temperature lower than the heating temperature for aging. The aging refers to holding the reaction mixture at a temperature lower than the heating temperature during crystallization for a certain period of time. The aging temperature may be room temperature (20°C to 25°C) or higher and 160°C or lower, and the aging time may be 2 hours or more and 160 hours or less.

After heating, the crystallized powder can be separated from the mother liquor by filtration, washed with water or deionized water, and dried to obtain an MSE-type zeolite. The resulting MSE-type zeolite is heated to remove organic substances remaining in the crystals. The heating for removing organic substances remaining in the crystals is also referred to as a second heating. The second heating may be performed at a temperature at which organic substances can be removed, and is preferably performed in a range of 500°C or higher and 800°C or lower. In order to maintain the framework structure of the resulting MSE-type zeolite, the temperature is preferably raised to the heating temperature over a period of 2 hours or more, and the heating time for maintaining the heating temperature after raising the temperature to the heating temperature is preferably 0.5 hour or more and 3 hours or less.

Whether or not the resulting zeolite is an MSE-type zeolite can be confirmed by measurement using a powder X-ray diffractometer. In the X-ray diffraction spectrum obtained using a powder X-ray diffractometer, if there is a diffraction peak at a diffraction angle ($2\theta$) position of 6.56° ± 0.15°, 6.8° ± 0.15°, 8.04° ± 0.15°, 19.38° ± 0.15°, 19.42° ± 0.15°, 21.68° ± 0.15°, 22.28° ± 0.15°, 22.32° ± 0.15°, 22.84° ± 0.15°, or 27.5° ± 0.15°, it can be confirmed to be an MSE zeolite.

Method for Producing EON-Type Zeolite

The method for producing an EON-type zeolite includes a step of preparing a raw material mixture containing a silica source, an aluminum source, an alkali metal source, water, and optionally an organic structure-directing agent (template), and a step of heating and crystallizing the raw material mixture to obtain an EON-type zeolite.

As for the silica source, aluminum source, and alkali metal source, those used in the method for producing an MSE-type zeolite described above can be used.

The organic structure-directing agent includes those containing bis(2-hydroxyethyl)dimethylammonium ions, and tris(2-hydroxyethyl)methylammonium. The organic structure-directing agent may be bis(2-hydroxyethyl)dimethylammonium chloride, and may be tris(2-hydroxyethyl)methylammonium hydroxide.

Step of Preparing Raw Material Mixture

The raw material mixture can be prepared in the same manner as in the method for producing an MSE-type zeolite described above.

Step of Crystallizing

The raw material mixture can be crystallized by heating at a temperature of 70°C or higher and 240°C or lower.

The heating performed on the raw material mixture is also referred to as a first heating. The first heating may be performed in a state where the raw material mixture is allowed to stand, or may be performed while stirring the raw material mixture. The heating temperature may be a temperature of 80°C or higher and 200°C or lower. The heating time may be 24 hours or more and 400 hours or less, may be 48 hours or more and 200 hours or less, and may be 72 hours or more and 170 hours or less. The heating may be performed under atmospheric pressure, and may be performed under pressure.

The raw material mixture may be allowed to stand, before heating, for a certain period of time at a temperature lower than the heating temperature for aging. The aging refers to holding the reaction mixture at a temperature lower than the heating temperature during crystallization for a certain period of time. The aging temperature may be room temperature (20°C to 25°C) or higher and 80°C or lower, and the aging time may be 2 hours or more and 80 hours or less.

After heating, the crystallized powder can be separated from the mother liquor by filtration, washed with water or deionized water, and dried to obtain an EON-type zeolite. When synthesized using an organic structure-directing agent, the resulting EON-type zeolite is heated to remove organic substances remaining in the crystals. The heating for removing organic substances remaining in the crystals is also referred to as a second heating. The second heating may be performed at a temperature at which organic substances can be removed, and is preferably performed in a range of 500°C or higher and 800°C or lower. In order to maintain the framework structure of the resulting EON-type zeolite, the temperature is preferably raised to the heating temperature over a period of 2 hours or more, and the heating time for maintaining the heating temperature after raising the temperature to the heating temperature is preferably 0.5 hour or more and 3 hours or less.

Whether or not the resulting zeolite is an EON-type zeolite can be confirmed by measurement using a powder X-ray diffractometer. In the X-ray diffraction spectrum obtained using a powder X-ray diffractometer, if there is a diffraction peak at a diffraction angle ($2\theta$) position of $6.42° \pm 0.14°$, $9.66° \pm 0.15°$, $13.02° \pm 0.15°$, $13.38° \pm 0.15°$, $23.12° \pm 0.15°$, $25.44° \pm 0.15°$, $26.18° \pm 0.15°$, $27.56° \pm 0.15°$, $27.78° \pm 0.16°$, or $28.06° \pm 0.17°$, it can be confirmed to be an EON zeolite.

Method for Containing Metal in Multipore Zeolite

The multipore zeolite can contain a metal by a liquid phase ion exchange method, a solid phase ion exchange method, or an impregnation method. Examples of the embodiment for containing a metal include an embodiment in which a metal is introduced into the multipore zeolite by ion exchange, and an embodiment in which the surface of the multipore zeolite is modified with a metal in the form of an oxide. The liquid phase ion exchange method is a method for ion exchange by dispersing or immersing the multipore zeolite in a metal salt solution composed of at least one metal ion selected from the group consisting of transition metals belonging to Groups 3 to 12 in the periodic table, amphoteric metals belonging to Groups 13 and 14 in the periodic table, alkali metals, and alkaline earth metals. The solid phase ion exchange method is a method for ion exchange by mixing the multipore zeolite with a metal salt or a metal oxide containing at least one metal ion selected from the group consisting of transition metals belonging to Groups 3 to 12 in the periodic table, amphoteric metals belonging to Groups 13 and 14 in the periodic table, alkali metals, and alkaline earth metals, and heat-treating the mixture at a temperature of, for example, 300°C or higher and 800°C or lower in a reducing atmosphere or an inert atmosphere. Examples of the types of the metal salt include metal acetate, metal chloride, metal sulfate, and metal nitrate. After the ion exchange treatment, the ion-exchanged multipore zeolite can be washed, dried at, for example, 100°C to 300°C, and calcined at, for example, 400°C to 1,000°C to obtain a multipore zeolite in which the ion exchange site on Al is ion-exchanged. The impregnation method is a method for containing a metal by immersing the multipore zeolite in a solution of a metal salt or a metal oxide containing at least one metal ion selected from the group consisting of transition metals belonging to Groups 3 to 12 in the periodic table, amphoteric metals belonging to Groups 13 and 14 in the periodic table, alkali metals, and alkaline earth metals, and heat-treating the mixture at a temperature of, for example, 30°C or higher and 200°C or lower for drying. After drying, the dried multipore zeolite can be calcined at, for example, 400°C to 1,000°C to obtain a multipore zeolite in which the ion exchange site on Al is ion-exchanged. Examples of the types of the metal salt include metal acetate, metal chloride, metal sulfate, and metal nitrate. Examples of the impregnation method include an incipient wetness method, an evaporation-drying method, a pore-filling method, a spraying method, and an equilibrium adsorption method. Examples of the precipitation method include a kneading method and a deposition method. At least a part of a specific metal to be introduced into the multipore zeolite is preferably introduced into small pore cages (cages having a maximum ring with an 8 or less-membered ring), particularly cages with a maximum 8-membered ring or cages with a maximum 6-membered ring. In order to introduce a specific metal into small pore cages, the calcining temperature is preferably 450°C or higher; and the calcining may be performed in an air atmosphere, and preferably performed under an inert atmosphere or under a reduced pressure of 0.1 MPa or less. By introducing a metal into small pore cages, the volume of large pores (pores having a ring with a 10 or more-membered ring) that adsorb hydrocarbons, particularly tunnel-type (linear-type) pores with a maximum 12-membered ring and cage-type pores with a maximum 10-membered ring, can be maintained. Also, the specific metal does not act directly on hydrocarbons but acts on the zeolite framework, so that the multipore zeolite containing the specific metal can adsorb hydrocarbons up to high temperatures.

Whether or not the specific metal is introduced into small pore cages in the multipore zeolite can be indirectly confirmed by the measurement of X-ray diffraction, such as by the change in lattice constant of the zeolite. In the multipore zeolite, the content of the specific metal introduced into the small pore cages relative to the content of the specific metal introduced into the tunnel-type (linear-type) pores with a maximum 12-membered ring and the cage-type pores with a maximum 10-membered ring is preferably more than 0.5, more preferably 1.0 or more, even more preferably 2.0 or more, and particularly preferably 3.0 or more, in terms of molar ratio. The content of the specific metal in the tunnel-type (linear-type) pores with a maximum 12-membered ring, the cage-type pores with a maximum 10-membered ring, or the small pore cages can be indirectly determined by the change in T-O bond distances of $TO_4$ units forming the framework structure, or by the distances from the framework elements, which is obtained by analysis using an X-ray diffractometer or the like.

Method for Containing Phosphorus or Sulfur in Multipore Zeolite

The multipore zeolite can be brought into contact with a phosphorus-containing compound or a sulfur-containing compound to contain phosphorus or sulfur in the multipore zeolite. Examples of the method for containing phosphorus or sulfur in the multipore zeolite include a vapor deposition method, an impregnation method, a precipitation method, and an ion exchange method. The vapor deposition method includes a method of placing the multipore zeolite and a phosphorus-containing compound or a sulfur-containing compound in a container, and evaporating phosphorus or sulfur at room temperature or by heating to contain phosphorus or sulfur in the multipore zeolite. The impregnation method includes a method of immersing the multipore zeolite in a liquid obtained by mixing a phosphorus-containing compound or a sulfur-containing compound with a solvent, and heating and drying the mixed liquid under normal pressure or reduced pressure to contain phosphorus or sulfur in the multipore zeolite. The phosphorus-containing compound may be phosphorus or phosphorus-containing ions. The sulfur-containing compound may be sulfur or sulfur-containing ions. Examples of the impregnation method include an incipient wetness method, an evaporation-drying method, a pore-filling method, a spraying method, and an equilibrium adsorption method. Examples of the precipitation method include a kneading method and a deposition method.

When phosphorus is contained in the multipore zeolite by the vapor deposition method, examples of the phosphorus-containing compound include trimethyl phosphate, triethyl phosphate, trimethyl phosphite, and triethyl phosphite. Among them, trimethyl phosphate is preferred from the viewpoint of low boiling point. When phosphorus is contained in the multipore zeolite by the impregnation method, the phosphorus-containing compound is preferably water-soluble, and examples thereof include: dihydrogen phosphates such as trimethyl phosphate, triethyl phosphate, trimethyl phosphite, triethyl phosphite, phosphoric acid, ammonium dihydrogen phosphate, sodium dihydrogen phosphate, and potassium dihydrogen phosphate; and hydrogen phosphates such as diammonium hydrogen phosphate and dipotassium hydrogen phosphate. Examples of the phosphoric acid include orthophosphoric acid ($H_3PO_4$), pyrophosphoric acid ($H_4P_2O_7$), triphosphoric acid ($H_5P_3O_{10}$), polyphosphoric acid, metaphosphoric acid ($HPO_3$), and ultraphosphoric acid. From the viewpoint of ease of drying, phosphoric acid such as orthophosphoric acid, trimethyl phosphate, ammonium phosphates such as ammonium dihydrogen phosphate and diammonium hydrogen phosphate are preferred. Examples of the solvent to be mixed with the phosphorus-containing compound include polar organic solvents such as deionized water, ethanol, 2-propanol, and acetone. From the viewpoint of ease of handling and drying, it is preferable to use deionized water or ethanol. The content of the phosphorus-containing compound may be in a range of 1% by mass or more and 25% by mass or less, may be in a range of 2% by mass or more and 20% by mass or less, and may be in a range of 5% by mass or more and 15% by mass or less, relative to 100% by mass of the total amount of the mixed liquid. When attaching the phosphorus-containing compound to the multipore zeolite by the impregnation method, the time for impregnating the multipore zeolite in the mixed liquid can be in a range of 0.5 hour or more and 2 hours or less. After impregnation, the multipore zeolite containing the phosphorus-containing compound may be dried. The drying temperature can be in a range of 80°C or higher and 200°C or lower, and the drying time can be in a range of 0.5 hour or more and 5 hours or less. The pressure at the time of drying is not particularly limited, and may be an atmospheric pressure (0.1 MPa) or under reduced pressure of 0.1 MPa or less. When sulfur is contained in the multipore zeolite, sulfate is preferably used.

The phosphorus- or sulfur-containing compound is attached to the multipore zeolite by the vapor deposition method or the impregnation method, and then heat-treated to obtain a phosphorus- or sulfur-containing multipore zeolite. The heat treatment temperature is preferably in a range of 200°C or higher and 800°C or lower, and more preferably in a range of 400°C or higher and 700°C or lower, in order to maintain the framework structure of the multipore zeolite. The atmosphere for heat treatment may be an atmospheric atmosphere or an atmosphere of an inert gas such as nitrogen.

The multipore zeolite containing a specific metal can be used as a hydrocarbon adsorbent. In the exhaust gas purifying catalyst described later, the hydrocarbon adsorbent constituting a hydrocarbon adsorption portion may also include non-multipore zeolites such as a BEA-type zeolite (zeolite with only 12-membered ring) and an MTW-type zeolite (zeolite with only 12-membered ring), in addition to the multipore zeolite containing a specific metal. For example, the MSE-type zeolite, which is a multipore zeolite, may include an MOR-type zeolite that is a multipore zeolite, a BEA-type zeolite that is a non-multipore zeolite, and an MTW-type zeolite that is a non-multipore zeolite. The hydrocarbon adsorbent may be composed of 100% by mass of the multipore zeolite containing a specific metal. When the hydrocarbon adsorbent includes non-multipore zeolites such as a BEA-type zeolite and an MTW-type zeolite in addition to the multipore zeolite containing a specific metal, the content of the multipore zeolite containing a specific metal is preferably in a range of 50% by mass or more and 99% by mass or less, more preferably in a range of 80% by mass or more and 99% by mass or less, and even more preferably in a range of 90% by mass or more and 99% by mass or less, relative to 100% by mass of the hydrocarbon adsorbent.

The hydrocarbon adsorbent composed of the multipore zeolite containing a specific metal can be used in an exhaust gas purifying catalyst by combining a hydrocarbon adsorption portion containing the hydrocarbon adsorbent and a purifying catalyst portion. The hydrocarbon adsorbent composed of the multipore zeolite containing a specific metal can be used to form a hydrocarbon adsorption portion by producing a hydrocarbon adsorbent portion composition containing the hydrocarbon adsorbent.

Exhaust Gas Purifying Catalyst

A first example of the embodiments of the present invention is an exhaust gas purifying catalyst including a substrate, a hydrocarbon adsorption portion containing the hydrocarbon adsorbent on the substrate, and a purifying catalyst portion on the hydrocarbon adsorption portion.

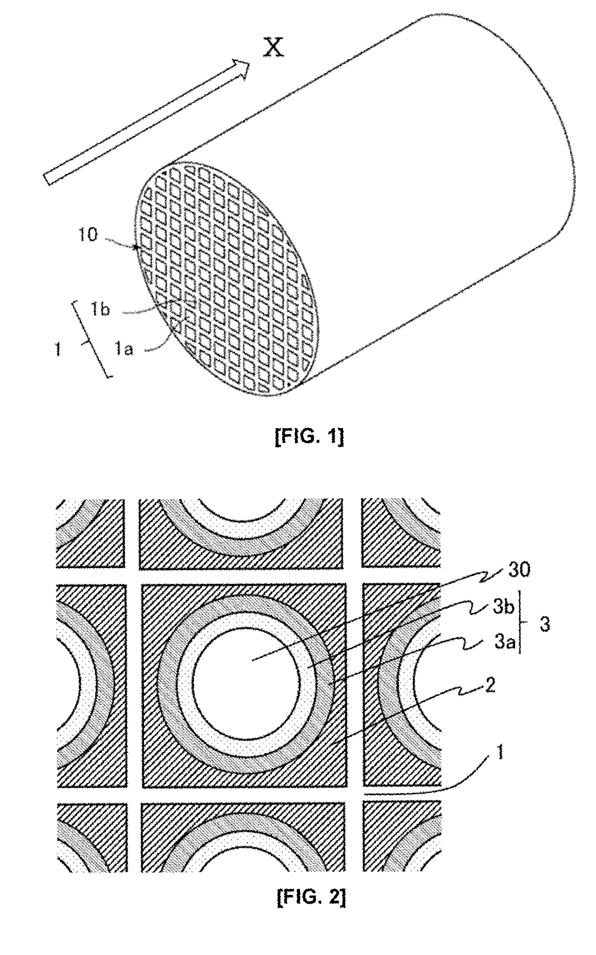

FIGS. 1 and 2 show an example of an exhaust gas purifying catalyst 10. FIG. 1 shows a ceramic substrate 1 having a plurality of cells 1a and partition walls 1b that partition the cells 1a. FIG. 2 shows a part of the cross section of the exhaust gas purifying catalyst 10 in the first example, in which the exhaust gas purifying catalyst 10 includes a substrate 1, a hydrocarbon adsorption portion 2 provided on the substrate 1, and a purifying catalyst portion 3 on the hydrocarbon adsorption portion 2. In FIG. 2, the reference numeral 30 represents an exhaust gas flow passage.

The purifying catalyst portion 3 in the first example includes a first purifying catalyst portion 3a containing at least one of Rh and Pt and having a Pd content of 0.1% by mass or less, and a second purifying catalyst portion 3b containing at least one of Pd and Pt and having an Rh content of 0.1% by mass or less, in which the first purifying catalyst portion 3a may be arranged on the side of the hydrocarbon adsorption portion 2, and the second purifying catalyst portion 3b may be arranged on the first purifying catalyst portion 3a.

The first purifying catalyst portion preferably contains a cerium oxide-zirconium oxide composite oxide ($CeO_2$-$ZrO_2$). The content of $CeO_2$ in the cerium oxide-zirconium oxide composite oxide is preferably in a range of more than 0% by mass and 30% by mass or less, and more preferably in a range of 15% by mass or more and 30% by mass or less. When the first purifying catalyst portion contains a cerium oxide-zirconium oxide composite oxide having a $CeO_2$ content in the range of 15% by mass or more and 30% by mass or less, the hydrocarbons desorbed from the hydrocarbon adsorption portion can be directly oxidized, which is preferable.

A second example of the embodiments of the present invention is an exhaust gas purifying catalyst including a substrate, a hydrocarbon adsorption portion containing a hydrocarbon adsorbent and at least one of Rh and Pt on the substrate and having a Pd content of 0.1 % by mass or less, and a purifying catalyst portion containing at least one of Pd and Pt on the hydrocarbon adsorption portion and having an Rh content of 0.1% by mass or less.

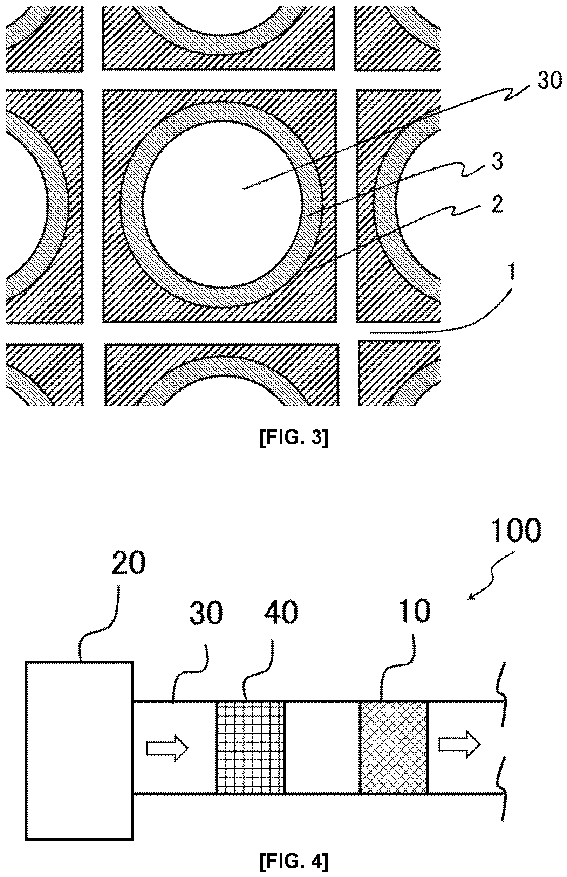

FIG. 3 shows a part of the cross section of an exhaust gas purifying catalyst 10 in the second example, in which the exhaust gas purifying catalyst 10 includes a substrate 1, a hydrocarbon adsorption portion 2 provided on the substrate 1, and a purifying catalyst portion 3 on the hydrocarbon adsorption portion 2. In FIG. 3, the reference numeral 30 represents an exhaust gas flow passage.

Hereinafter, each part constituting the exhaust gas purifying catalyst will be described.

Substrate

The substrate can use a known exhaust gas catalyst substrate. Examples of the material of the substrate include ceramics and metals. Examples of the ceramic substrate include refractory ceramic materials such as cordierite, hydrocarbons, mullite, silica-alumina, and alumina. Examples of the metallic substrate include refractory metals such as stainless steel. As for the shape of the substrate, for example, those having numerous cells serving as fine flow passages parallel to each other inside the substrate, such as a honeycomb-shaped substrate, can be used. Examples of such substrate shapes include a wall-flow-type substrate and a flow-through-type substrate.

Hydrocarbon Adsorption Portion

The hydrocarbon adsorption portion can be formed by: preparing a slurried hydrocarbon adsorption portion composition that contains a hydrocarbon adsorbent containing the multipore zeolite containing a metal or a hydrocarbon adsorbent composed of the multipore zeolite containing a metal, and that contains an inorganic oxide such as alumina particles, an oxygen adsorption/release material, an alumina sol, a silica sol, or a zirconia sol; coating the slurried hydrocarbon adsorption portion composition on a substrate; drying the composition as necessary; and calcining the resulting product. Examples of the oxygen adsorption/release material include an inorganic oxide such as a ceria-zirconia composite oxide. The inorganic oxide may contain rare earth elements. The hydrocarbon adsorption portion composition for forming the hydrocarbon adsorption portion may contain Rh and/or Pt. When the hydrocarbon adsorbent contained in the hydrocarbon adsorption portion composition is a hydrocarbon adsorbent composed of an MSE-type zeolite among multipore zeolites, the content of the hydrocarbon adsorbent is preferably 10% by mass or more and 85% by mass or less, more preferably 50% by mass or more and 75% by mass or less, and even more preferably 60% by mass or more and 70% by mass or less, relative to the solid content of the hydrocarbon adsorption portion composition. When the hydrocarbon adsorption portion contains Rh and/or Pt, the total content of Rh and Pt contained in the hydrocarbon adsorption portion is preferably 0.05% by mass or more and 0.8% by mass or less, more preferably 0.14% by mass or more and 0.7% by mass or less, and even more preferably 0.2% by mass or more and 0.5% by mass or less, relative to the solid content of the hydrocarbon adsorption portion composition. By containing Rh and/or Pt in the hydrocarbon adsorption portion, the hydrocarbons desorbed in the hydrocarbon adsorption portion can be effectively purified.

The purifying catalyst portion can be formed by: preparing a slurried purifying catalyst portion composition; coating the slurried purifying catalyst portion composition on a hydrocarbon adsorption portion formed on a substrate; drying the composition as necessary; and calcining the resulting product. The slurried purifying catalyst portion composition can be produced by mixing and stirring an element serving as a catalytic active component, a NOx storage material, a catalyst carrier, and optionally a stabilizer, a binder, other components, and water. The binder can use an inorganic binder, for example, a water-soluble solution such as an alumina sol. When the exhaust gas purifying catalyst includes an oxidation catalyst layer, a NOx storage layer, and a reduction catalyst layer, an exhaust gas purifying catalyst portion composition containing a catalytic active element necessary for catalytic activity of each layer can be used for the exhaust gas purifying catalyst portion composition constituting each layer.

When the purifying catalyst portion include a first purifying catalyst portion containing Rh and a second purifying catalyst portion containing Pd, the first purifying catalyst portion is arranged on the side of the hydrocarbon adsorption portion, and the second purifying catalyst portion is provided on the first purifying catalyst portion, a first purifying catalyst portion composition containing Rh and a second purifying catalyst portion composition containing Pd are prepared. When the hydrocarbon adsorption portion contains the hydrocarbon adsorbent and Rh, a purifying catalyst portion composition containing Pd is prepared.

The first purifying catalyst portion composition contains Rh and/or Pt. The total content of Rh and Pt in the first purifying catalyst portion composition is preferably 0.1% by mass or more and 1.8% by mass or less, more preferably 0.2% by mass or more and 1.2% by mass or less, and even more preferably 0.5% by mass or more and 1.0% by mass or less, relative to the solid content of the first purifying catalyst portion composition.

The first purifying catalyst portion composition preferably contains a cerium oxide-zirconium oxide composite oxide ($CeO_2$-$ZrO_2$) having a $CeO_2$ content preferably in a range of more than 0% by mass and 30% by mass or less, more preferably in a range of 15% by mass or more and 30% by mass or less. In the present specification, a cerium oxide-zirconium oxide composite oxide having a $CeO_2$ content in a range of 15% by mass or more and 30% by mass or less and containing more $ZrO_2$ than $CeO_2$ is also referred to as a "ZC composite oxide". The content of the ZC composite oxide in the first purifying catalyst portion composition is preferably 30% by mass or more and 80% by mass or less, more preferably 50% by mass or more and 80% by mass or less, and even more preferably 55% by mass or more and 75% by mass or less, relative to the solid content of the first purifying catalyst portion composition.

The first purifying catalyst portion composition may contain platinum group metals other than Rh and Pt. The content of platinum group metals other than Rh and Pt in the first purifying catalyst portion composition is preferably less than 50% by mass relative to the total amount of platinum group metals contained in the first purifying catalyst portion composition. It is preferred that the first purifying catalyst portion composition contains substantially no Pd. When Pd is contained in the solid content of the first purifying catalyst portion composition, the phrase "the first purifying catalyst portion composition contains substantially no Pd" means that the content of Pd is less than 0.1% by mass, and is preferably 0% by mass relative to the solid content of the first purifying catalyst portion composition. The platinum group metals include Pt, Pd, Rh, Ir, Ru, and Os.

The second purifying catalyst portion composition or the purifying catalyst portion composition contains Pd and/or Pt. The total content of Pd and Pt in the second purifying catalyst portion composition is preferably 0.5% by mass or more and 8.0% by mass or less, more preferably 0.8% by mass or more and 7.0% by mass or less, and even more preferably 1.5% by mass or more and 3.5% by mass or less, relative to the solid content of the second purifying catalyst portion composition.

The second purifying catalyst portion composition preferably contains a cerium oxide-zirconium oxide composite oxide ($CeO_2$-$ZrO_2$) having a $CeO_2$ content in a range of 25% by mass to 55% by mass. In the present specification, a cerium oxide-zirconium oxide composite oxide having a $CeO_2$ content in a range of 25% by mass to 55% by mass and

containing less $ZrO_2$ than $CeO_2$ is also referred to as a "CZ composite oxide". The content of the CZ composite oxide in the second purifying catalyst portion composition is preferably 20% by mass or more and 80% by mass or less, more preferably 30% by mass or more and 70% by mass or less, and even more preferably 40% by mass or more and 60% by mass or less, relative to the solid content of the second purifying catalyst portion composition.

The second purifying catalyst portion composition may contain platinum group metals other than Pd and Pt. The content of platinum group metals other than Pd and Pt in the second purifying catalyst portion composition is preferably less than 50% by mass relative to the total amount of platinum group metals contained in the second purifying catalyst portion composition.

It is preferred that the second purifying catalyst portion composition or the purifying catalyst portion composition contains substantially no Rh. When Rh is contained in the solid content of the second purifying catalyst portion composition, the phrase "the second purifying catalyst portion composition contains substantially no Rh" means that the content of Rh is less than 0.1% by mass, and is preferably 0% by mass relative to the solid content of the second purifying catalyst portion composition.

The purifying catalyst portion composition, the first purifying catalyst portion composition, and the second purifying catalyst portion composition can be prepared by any known method. For example, a compound containing a specific element such as Rh, Pt, or Pd may be brought into contact with an inorganic oxide carrier (such as cerium oxide-zirconium oxide composite oxide) to obtain an inorganic oxide carrier on which the specific element is supported, thereby obtaining a purifying catalyst portion composition containing the inorganic oxide carrier. Examples of the method for attaching a specific element to an inorganic oxide carrier include a vapor deposition method, an impregnation method, a precipitation method, and an ion exchange method. Examples of the vapor deposition method include a method of placing an inorganic oxide and a compound containing a specific element into a container, and evaporating the compound containing the element at room temperature or by heating to attach the compound containing the element on the inorganic oxide. Examples of the impregnation method include a method of immersing an inorganic oxide into a liquid obtained by mixing the compound containing the element with a solvent, and heating and drying the mixed liquid under normal pressure or reduced pressure to attach the compound containing the element on the inorganic oxide. Examples of the impregnation method include an incipient wetness method, an evaporation-drying method, a pore-filling method, a spraying method, and an equilibrium adsorption method. Examples of the precipitation method include a kneading method and a deposition method. The zeolite on which the compound containing the elements is attached may be dried at a temperature of, for example, 80°C or higher and 150°C or lower; the drying time may be in a range of 0.5 hour or more and 5 hours or less; the pressure in drying is not particularly limited, and may be an atmospheric pressure (0.1 MPa) or under a reduced pressure of 0.1 MPa or less. The zeolite on which the elements are attached may be dried and further heat-treated as necessary. The heat treatment temperature may be in a range of 200°C or higher and 800°C or lower, and may be in a range of 400°C or higher and 700°C or lower, in order to prevent pores of the zeolite from being damaged.

In the case of the exhaust gas purifying catalyst in the first example where the purifying catalyst portion includes a first purifying catalyst portion containing at least one of Rh and Pt, and a second purifying catalyst portion containing at least one of Pd and Pt, the first purifying catalyst portion can be formed by coating a first purifying catalyst portion composition on a hydrocarbon adsorption portion formed on a substrate, drying the composition as necessary, and calcining the resulting product. Next, the second purifying catalyst portion can be formed by coating a second purifying catalyst portion composition on the first purifying catalyst portion, drying the composition as necessary, and calcining the resulting product. The first purifying catalyst portion and the second purifying catalyst portion can be discriminated by quantitatively analyzing a cross section of the cut exhaust gas purifying catalyst using an electron probe micro analyzer (EPMA). The first purifying catalyst portion contains mainly Rh and Pt as platinum group metals, and substantially no Pd. The first purifying catalyst portion is the portion where, when a cross section of the cut exhaust gas purifying catalyst is quantitatively analyzed by EPMA, the Pd content is 0.1% by mass or less relative to 100% by mass of the solid content of the first purifying catalyst portion composition. The second purifying catalyst portion contains mainly Pd and Pt as platinum group metals, and substantially no Rh. The second purifying catalyst portion is the portion where, when a cross section of the cut exhaust gas purifying catalyst is quantitatively analyzed by EPMA, the Rh content is 0.1% by mass or less relative to 100% by mass of the solid content of the second purifying catalyst portion composition.

In the case of the exhaust gas purifying catalyst in the second example where the hydrocarbon adsorption portion includes a hydrocarbon adsorbent and Rh, the purifying catalyst portion can be formed by coating a purifying catalyst portion composition containing Pd on a hydrocarbon adsorption portion formed on a substrate, drying the composition as necessary, and calcining the resulting product. The purifying catalyst portion can be discriminated by quantitatively analyzing a cross section of the cut exhaust gas purifying catalyst using an electron probe micro analyzer (EPMA). The purifying catalyst portion contains mainly Pd and Pt as platinum group metals, and substantially no Rh. The purifying catalyst portion is the portion where, when a cross section of the cut exhaust gas purifying catalyst is quantitatively analyzed by EPMA, the Rh content is 0.1% by mass or less relative to 100% by mass of the solid content of the purifying catalyst portion composition.

The exhaust gas purifying catalyst can also be used in a selective catalytic reduction (SCR) system. The selective catalytic reduction (SCR) is capable of reducing NOx to $N_2$ by being reacted with a nitrogen compound such as ammonia or urea, or with hydrocarbons.

The exhaust gas purifying catalyst can be used for purifying exhaust gases emitted from internal combustion engines using fuel as a power source, such as gasoline engines and diesel engines, and is capable of adsorbing and storing hydrocarbons up to relatively high temperatures, resulting in improving removal performance of hydrocarbons and reduction performance of NOx.


Exhaust Gas Purifying System

An exhaust gas purifying system using the above-mentioned exhaust gas purifying catalyst will be described. FIGS. 4 to 6 show exhaust gas purifying systems in first to third examples of the present invention.

As shown in FIG. 4, an exhaust gas purifying system 100 in the first example includes an internal combustion engine 20, a first exhaust gas purifying catalyst 40 provided upstream in an exhaust gas flow passage 30 connected to the internal combustion engine, and a second exhaust gas purifying catalyst 10 provided downstream from the first exhaust gas purifying catalyst 40 in the exhaust gas flow direction in the exhaust gas flow passage 30. The second exhaust gas purifying catalyst 10 is the above-mentioned exhaust gas purifying catalyst 10 in the first example or in the second example of the present invention. When the second exhaust gas purifying catalyst 10 is provided downstream from the first exhaust gas purifying catalyst 40 in the exhaust gas flow passage 30, an exhaust gas having a relatively high temperature of approximately 1,000°C emitted from the internal combustion engine 20 passes through the first exhaust gas purifying catalyst 40, and the temperature of the exhaust gas is lowered, so that the multipore zeolite contained in the hydrocarbon adsorption portion in the second exhaust gas purifying catalyst 10 can be prevented from deteriorating due to heat, and the adsorption capacity for hydrocarbons in the hydrocarbon adsorption portion can be maintained. The second exhaust gas purifying catalyst 10, which is the exhaust gas purifying catalyst described above, has a platinum group content ratio in a range of 0.1 g/L or more and 3.0 g/L or less relative to the volume of the second exhaust gas purifying catalyst. When the platinum group content ratio in the second exhaust gas purifying catalyst 10, which is the exhaust gas purifying catalyst described above, is in the range of 0.1 g/L or more and 3.0 g/L or less relative to the volume of the second exhaust gas purifying catalyst, the desorbed hydrocarbons can be purified more efficiently. FIG. 4 shows an example in which the exhaust gas purifying catalyst has two of the first exhaust gas purifying catalyst 40 and the second exhaust gas purifying catalyst 10. However, there may be three or more exhaust gas purifying catalysts. For example, other exhaust gas purifying catalysts may be provided downstream from the second exhaust gas purifying catalyst 10 in the exhaust gas flow direction. The other exhaust gas purifying catalysts to be provided downstream from the second exhaust gas purifying catalyst 10 may be the above-mentioned exhaust gas purifying catalyst 10 in the first example or in the second example of the present invention, and may be other exhaust gas purifying catalysts. As for the shape of the substrate used for other exhaust gas purifying catalysts, a wall-flow-type substrate, a flow-through-type substrate, and the like can be appropriately used.

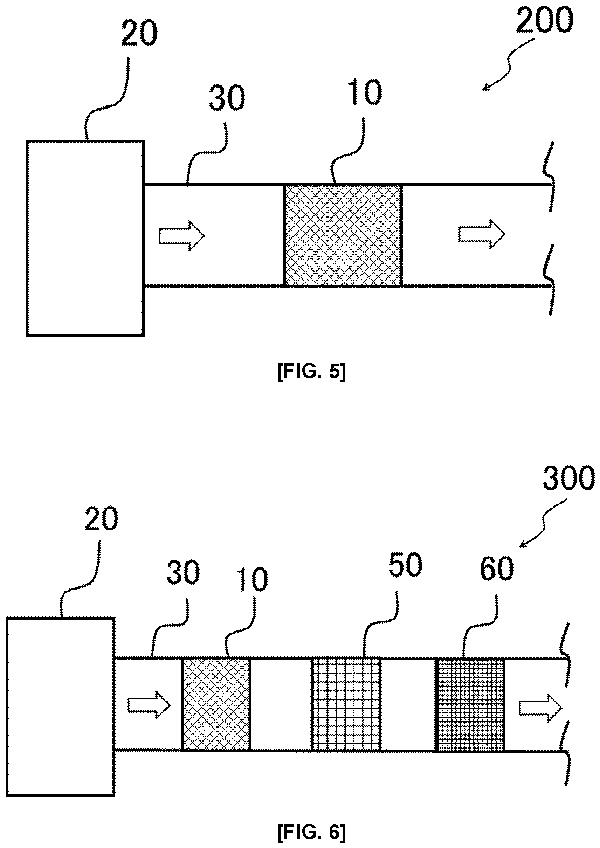

As shown in FIG. 5, an exhaust gas purifying system 200 in the second example includes an internal combustion engine 20 and a single exhaust gas purifying catalyst 10 provided in an exhaust gas flow passage 30 connected to the internal combustion engine, wherein the exhaust gas purifying catalyst 10 is the above-mentioned exhaust gas purifying catalyst of the present invention. The exhaust gas purifying system 200 in the second example of the present invention includes the exhaust gas purifying catalyst 10 of the present invention having high removal performance for hydrocarbons. Therefore, when it is applied in an internal combustion engine emitting a relatively small amount of exhaust gas, the exhaust gas purification performance can be made sufficient by using only a single number of the exhaust gas purifying catalysts 10, thereby achieving both high purification performance and low cost.

As shown in FIG. 6, an exhaust gas purifying system 300 in the third example includes an internal combustion engine 20 and a plurality of exhaust gas purifying catalysts 10, 50, and 60 provided in an exhaust gas flow passage 30 connected to the internal combustion engine, wherein among the plurality of exhaust gas purifying catalysts 10, 50, and 60, a first exhaust gas purifying catalyst 10 arranged most upstream in the exhaust gas flow direction is the above-mentioned exhaust gas purifying catalyst of the present invention. The exhaust gas purifying system 300 in the third example in FIG. 6 shows an example in which three exhaust gas purifying catalysts of the most upstream exhaust gas purifying catalyst 10, the second exhaust gas purifying catalyst 50, and the third exhaust gas purifying catalyst 60 are provided in the exhaust gas flow passage 30. The exhaust gas purifying system 300 may include two or more exhaust gas purifying catalysts in the exhaust gas flow passage 30, and the number of exhaust gas purifying catalysts is not limited. The exhaust gas purifying system 300 in the third example of the present invention has a plurality of exhaust gas purifying catalysts in the exhaust gas flow passage 30, and the first exhaust gas purifying catalyst 10 arranged on the most upstream side is the exhaust gas purifying catalyst of the present invention, so that the desorbed hydrocarbons can be purified more efficiently by the downstream exhaust gas purifying catalysts.

Method for Treating Exhaust Gas

The method for treating an exhaust gas according to an example of the embodiments of the present invention includes bringing a combustion exhaust gas containing hydrocarbons into contact with the exhaust gas purifying catalyst of the embodiments of the present invention to adsorb the hydrocarbons to the exhaust gas purifying catalyst, and desorbing the hydrocarbons from the exhaust gas purifying catalyst at a temperature of 200°C or higher.

**EXAMPLES**

Hereinafter, the present invention will be further described in detail based on Examples and Comparative Examples. The present invention is not limited to the following Examples.

Production of MSE-Type Zeolite

Deionized water (pure water), potassium hydroxide, aluminum hydroxide, N,N,N',N'-tetraalkylbicyclo[2.2.2]oct-7-ene-2,3:5,6-dipyrrolidinium iodide, and colloidal silica (LUDOX (registered trademark) HS-40, manufactured by Sigma-Aldrich Japan) were prepared, and these were mixed to obtain a raw material composition having a composition with the following molar ratios of the raw materials.

$$SiO_2/Al_2O_3 = 20$$

$$K/Si = 0.38$$

N,N,N',N'-tetraalkylbicyclo[2.2.2]oct-7-ene-2,3:5,6-dipyrrolidinium iodide/Si = 0.1

$$H_2O/Si = 30$$

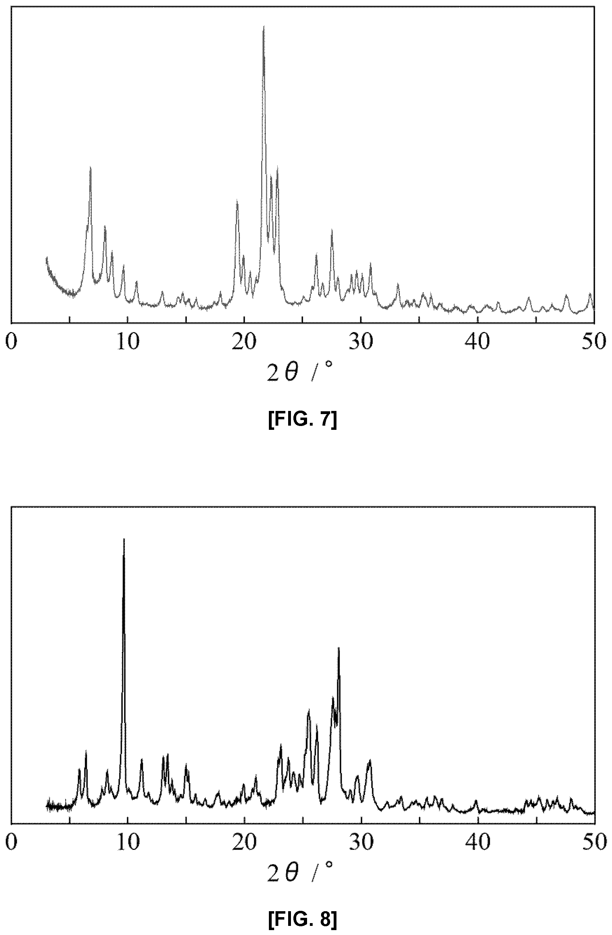

The resulting raw material composition was filled into a sealed container and crystallized by heating at 160°C for 16 days in a static state. The crystallized raw material composition was subjected to solid-liquid separation, and washed with deionized water to recover the crystal. The resulting crystal was dried at 100°C for 8 hours, and heat-treated at 600°C for 1 hour in an atmospheric atmosphere to obtain an MSE-type zeolite. Whether or not the resulting zeolite was an MSE-type zeolite was confirmed by measuring using a powder X-ray diffractometer. In the X-ray diffraction spectrum obtained using a powder X-ray diffractometer, it can be confirmed that the resulting zeolite is an MSE-type zeolite by the presence of a diffraction peak at the above-mentioned diffraction angle (2θ) position. The diffraction angle (2θ) position of the diffraction peak in the X-ray diffraction spectrum is the same as that of the diffraction peak in the X-ray diffraction spectrum published by the International Zeolite Society. FIG. 7 shows the X-ray diffraction spectrum of the resulting MSE-type zeolite.
The resulting MSE-type zeolite had a composition with the following molar ratio of the components.

$$SiO_2/Al_2O_3 = 20$$

Production of EON-type zeolite

Deionized water (pure water), sodium hydroxide, sodium aluminate, and No. 3 sodium silicate were prepared, and these were mixed to obtain a raw material composition having a composition with the following molar ratios of the raw materials.

$$SiO_2/Al_2O_3 = 10$$

$$Na/Si = 0.44$$

$$H_2O/Si = 20$$

The resulting raw material composition was filled into a sealed container and crystallized by heating at 150°C for 7 days in a static state. The crystallized raw material composition was subjected to solid-liquid separation, and washed with deionized water to recover the crystal. The resulting crystal was dried at 100°C for 8 hours, and heat-treated at 600°C for 1 hour in an atmospheric atmosphere to obtain an EON-type zeolite. Whether or not the resulting zeolite was an EON-type zeolite was confirmed by measuring using a powder X-ray diffractometer. In the X-ray diffraction spectrum obtained using a powder X-ray diffractometer, it can be confirmed that the resulting zeolite is an EON-type zeolite by the presence of a diffraction peak at the above-mentioned diffraction angle ($2\theta$) position. The diffraction angle ($2\theta$) position of the diffraction peak in the X-ray diffraction spectrum is the same as that of the diffraction peak in the X-ray diffraction spectrum published by the International Zeolite Society. FIG. 8 shows the X-ray diffraction spectrum of the resulting EON-type zeolite.

The resulting EON-type zeolite had a composition with the following molar ratios of the components.

$$SiO_2/Al_2O_3 = 7.6$$

$$Na/Al = 0.95$$

Example 1

Production of Hydrocarbon Adsorbent

The resulting MSE-type zeolite in an amount of 1 g was immersed in 10 g of a 1 mol/L ammonium chloride aqueous solution at 80°C, subjected to solid-liquid separation, and washed with deionized water to obtain an $NH_4$-type MSE-type zeolite. The resulting $NH_4$-type MSE-type zeolite in an amount of 1 g was immersed in 100 g of a 0.25 mol/L copper acetate (II) aqueous solution at 60°C, subjected to solid-liquid separation, and washed with deionized water to recover a wet powder. The resulting wet powder was dried at 100°C for 8 hours, and heat-treated at 550°C for 3 hours in an atmospheric atmosphere, thereby obtaining a Cu ion-exchanged MSE-type zeolite having a composition with the following molar ratios. The resulting Cu ion-exchanged MSE-type zeolite was used as a hydrocarbon adsorbent.

$$SiO_2/Al_2O_3 = 20$$

$$Cu/Al = 0.75$$

Example 2

The resulting MSE-type zeolite in an amount of 1 g was immersed in 10 g of a 1 mol/L ammonium chloride aqueous solution at 80°C, subjected to solid-liquid separation, and washed with deionized water to obtain an $NH_4$-type MSE-type zeolite. The resulting $NH_4$-type MSE-type zeolite in an amount of 1 g was immersed in 100 g of a 0.25 mol/L cesium chloride aqueous solution, subjected to solid-liquid separation, and washed with deionized water to obtain a Cs-type MSE-type zeolite in a wet state. The resulting Cs-containing MSE-type zeolite was dried at 100°C for 8 hours, and heat-treated at 550°C for 3 hours in an atmospheric atmosphere, thereby obtaining a Cs ion-exchanged MSE-type zeolite having a composition with the following molar ratios. The MSE-type zeolite was ion-exchanged with Cs and H. The resulting Cs-containing MSE-type zeolite was used as a hydrocarbon adsorbent.

$$SiO_2/Al_2O_3 = 20$$

$$Cs/Al = 0.22$$

Example 3

The resulting EON-type zeolite in an amount of 1 g was immersed in 10 g of a 1 mol/L ammonium chloride aqueous solution at 60°C, subjected to solid-liquid separation, and washed with deionized water to obtain an $NH_4$-type EON-type zeolite. The resulting $NH_4$-type EON-type zeolite in an amount of 1 g was immersed in 2.5 g of 1 mol/L sulfuric acid at 60°C, subjected to solid-liquid separation, and washed with deionized water to obtain an H-type EON-type zeolite. The resulting H-type EON-type zeolite in an amount of 1 g was immersed in 10 g of a 0.50 mol/L copper acetate (II) aqueous solution, subjected to solid-liquid separation, and washed with deionized water to recover a wet powder. The resulting wet powder was dried at 100°C for 8 hours, and heat-treated at 550°C for 3 hours in an atmospheric atmosphere, thereby obtaining a Cu ion-exchanged EON-type zeolite having a composition with the following molar ratios. The resulting Cu ion-exchanged EON-type zeolite was used as a hydrocarbon adsorbent.

$$SiO_2/Al_2O_3 = 20$$

$$Cu/Al = 0.5$$

Example 4

The above-mentioned wet powder of the H-type EON-type zeolite obtained in Example 3 in an amount of 1 g was immersed in 5.0 g of a 0.30 mol/L cesium carbonate aqueous solution at 60°C, subjected to solid-liquid separation, and washed with deionized water to recover a wet powder. The resulting wet powder was dried at 100°C for 8 hours, and heat-treated at 550°C for 3 hours in an atmospheric atmosphere, thereby obtaining a Cs ion-exchanged EON-type zeolite having a composition with the following molar ratios. The resulting Cs ion-exchanged EON-type zeolite was used as a hydrocarbon adsorbent.

$$SiO_2/Al_2O_3 = 13$$

$$Cs/Al = 0.25$$

Comparative Example 1

A commercially available H-type BEA-type zeolite ($SiO_2/Al_2O_3$ molar ratio of 37) in an amount of 1 g was suspended in 5 g of a copper acetate (II) aqueous solution at 60°C, and evaporated and dried to recover a wet powder. The resulting wet powder was dried at 100°C for 8 hours, and heat-treated at 550°C for 3 hours in an atmospheric atmosphere, thereby obtaining a Cu-containing BEA-type zeolite having a composition with the following molar ratios. The resulting Cu-containing BEA-type zeolite was used as a hydrocarbon adsorbent.

$$SiO_2/Al_2O_3 = 37$$

$$Cu/Al = 0.88$$

Comparative Example 2

A BEA-type zeolite ($SiO_2/Al_2O_3$ molar ratio of 37) in an amount of 1 g was immersed in 10 g of a 0.1 mol/L ammonium chloride aqueous solution at 60°C, subjected to solid-liquid separation, and washed with deionized water to obtain an $NH_4$-type BEA-type zeolite. The resulting $NH_4$-type BEA-type zeolite in an amount of 1 g was immersed in 30 g of a 0.05 mol/L cesium acetate aqueous solution at 60°C, subjected to solid-liquid separation, and washed with deionized water to recover a wet powder. The resulting wet powder was dried at 100°C for 8 hours, and heat-treated at 550°C for 3 hours in an atmospheric atmosphere, thereby obtaining a Cs-containing BEA-type zeolite having a composition with the following molar ratios. The BEA-type zeolite was ion-exchanged with Cs and H. The resulting Cs-containing BEA-type zeolite was used as a hydrocarbon adsorbent.

$$SiO_2/Al_2O_3 = 37$$

$$Cs/Al = 0.18$$

Comparative Example 3

A Cs-containing MFI-type zeolite was obtained in the same manner as in Comparative Example 3 except that an MFI-type zeolite ($SiO_2/Al_2O_3$ molar ratio of 39) was used instead of the MFI-type zeolite. The MFI-type zeolite was ion-exchanged with Cs and H. The Cs-containing MFI-type zeolite had a composition with the following molar ratios. The resulting Cs-containing MFI-type zeolite was used as a hydrocarbon adsorbent.

$$SiO_2/Al_2O_3 = 39$$

$$Cs/Al = 0.17$$

Comparative Example 4

The above-mentioned wet powder of the $NH_4$-type MSE-type zeolite obtained in Example 1 was dried at 100°C for 8 hours, and heat-treated at 550°C for 3 hours in an atmospheric atmosphere. The resulting product was used as a hydrocarbon adsorbent as it was.

Preparation of Measurement Sample

Each raw material composition or zeolite was filled into a vinyl chloride tube having a diameter of 30 mm, and compression-molded to prepare a measurement sample.

$SiO_2/Al_2O_3$ Molar Ratio

Using a scanning fluorescent X-ray analyzer (ZSX Primus II, manufactured by Rigaku Corp.), the Si and Al amounts in the measurement sample were measured by elemental analysis, and the $SiO_2/Al_2O_3$ molar ratio was calculated from the measured Si and Al amounts.

Cu/Al Ratio

Using the above-mentioned scanning fluorescent X-ray analyzer, the Cu amount and the Al amount in the measurement sample were measured by elemental analysis to determine the Cu amount and the Cu/Al ratio. In Table 1, the Cu amount is described as the metal content ratio, and the Cu/Al ratio is described as the metal/Al ratio.

Cs/Al Ratio

Using the above-mentioned scanning fluorescent X-ray analyzer, the Cs amount and the Al amount in the measurement sample were measured by elemental analysis to calculate the Cs/Al ratio. In Table 1, the Cs amount is described as the metal content ratio, and the Cs/Al ratio is described as the metal/Al ratio.

Toluene Desorption Amount/Adsorption Amount Ratio

The hydrocarbon adsorbent in each of Examples and Comparative Examples was heated from 50°C to 500°C by a temperature rising reaction method while circulating toluene, and the adsorption temperature, the desorption temperature, the adsorption amount, and the desorption amount of toluene were measured.

Specifically, using a fixed-bed flow-type reactor as a flow reactor, 0.1 g of the measurement sample of each hydrocarbon adsorbent was filled into in a quartz reaction tube of the flow reactor, and heated from 50°C to 500°C at a heating rate of 20°C/min by a temperature rising reaction method while circulating an evaluation gas containing 71 ppm of toluene at a rate of 1 L/min, to adsorb and desorb toluene thereon. For the measurement of the adsorption and desorption of toluene on the zeolite, the decrease in the amount detected by a detector (VMS-1000F, manufactured by Shimadzu Corp.) arranged downstream with respect to the amount of toluene circulating was used as the adsorption amount and the purification amount. In the region where a value equal to or more than the amount of flow to the hydrocarbon adsorbent was detected, the adsorbed hydrocarbons were desorbed. The ratio ($ZD_2/ZD_1 \times 100$) of the total molar amount $ZD_2$ of toluene desorbed from the hydrocarbon adsorbent at 200°C or lower to the total molar amount $ZD_1$ of toluene adsorbed at 50°C or higher and lower than 200°C was used as the toluene desorption amount/adsorption amount ratio. The results are shown in Table 1.

Measurement Conditions

Evaluation gas: 71 ppm of toluene and the balance being nitrogen ($N_2$).

Heat Treatment

The hydrocarbon adsorbent in each of Examples 1, 2, 4, and Comparative Examples 1 to 4 was heat-treated under the following conditions:

(1) Temperature: 850°C;
(2) Time period: 25 hours;
(3) Atmosphere: An atmospheric atmosphere containing 10% by volume of water vapor ($H_2O$), which was prepared by evaporating water vapor from a tank containing water and adjusting saturated water vapor pressure with temperature;
(4) Model gas flow mode: The following model gas (5) flowed at 3 L/min for 80 seconds and air flowed at 3 L/min for 20 seconds, alternately; and
(5) Model gas: The total of $C_3H_6$, $O_2$, and $N_2$ was 3 L/min, $C_3H_6$ was 70 mL/min, $O_2$ was 70 mL/min, and the balance was nitrogen ($N_2$).

Peak Intensity Ratio in X-ray Diffraction Spectrum

The hydrocarbon adsorbent in each of Examples 1, 2, 4, and Comparative Examples 1 to 4 was subjected to X-ray diffraction measurement using an X-ray diffractometer (model number: MiniFlex600, manufactured by Rigaku Corp.) before and after the heat treatment, and the peak intensity ratio of the X-ray diffraction spectra measured before and after the heat treatment was determined by the following formula. The diffraction angle ($2\theta$) position of the diffraction peak for determining the peak intensity ratio was respectively the strongest peak around $2\theta = 21.7°$ for the MSE-type zeolite, the strongest peak around $2\theta = 22.4°$ for the BEA-type zeolite, the strongest peak around $2\theta = 22.9°$ for the MFI-type zeolite, and the strongest peak around $2\theta = 25.6°$ for the EON-type zeolite. The higher the determined peak intensity ratio, the more the zeolite maintains the crystal structure after the heat treatment.

$$\text{Peak intensity ratio (\%)} = (\text{peak intensity after heat treatment} / \text{peak intensity before heat treatment}) \times 100$$

[Table 1]

| | Produced zeolite | | | | | Evaluation | |
| | | | | | | Before heat treatment | Before and after heat treatment |
| | Framework structure | $SiO_2$ / $Al_2O_3$ molar ratio | Metal | Metal content ratio (mass %) | Metal / Al ratio | Toluene desorption amount / adsorption amount ratio (mol %) | Peak intensity ratio D/C |
| Example 1 | MSE | 20 | Cu | 6.6 | 0.75 | 0 | 0.85 |
| Example 2 | MSE | 20 | Cs | 2.0 | 0.22 | 2.3 | 0.78 |
| Example 3 | EON | 20 | Cu | 4.5 | 0.50 | 0 | - |

(continued)

| | Produced zeolite | | | | | Evaluation | |
|---|---|---|---|---|---|---|---|
| | | | | | | Before heat treatment | Before and after heat treatment |
| | Framework structure | $SiO_2$ / $Al_2O_3$ molar ratio | Metal | Metal content ratio (mass %) | Metal / Al ratio | Toluene desorption amount / adsorption amount ratio (mol %) | Peak intensity ratio D/C |
| Example 4 | EON | 13 | Cs | 3.6 | 0.25 | 4.9 | 0.79 |
| Comparative Example 1 | BEA | 37 | Cu | 4.5 | 0.88 | 0 | 0 |
| Comparative Example 2 | BEA | 37 | Cs | 1.0 | 0.18 | 51.0 | 0.87 |
| Comparative Example 3 | MFI | 39 | Cs | 1.0 | 0.17 | 38.5 | 0.96 |
| Comparative Example 4 | MSE | 20 | - | - | - | 58.9 | 0.93 |

As shown in Table 1, it was confirmed that the hydrocarbon adsorbent (multipore zeolite containing a specific metal) in each of Examples 1 to 4 had a lower value of the toluene desorption amount/adsorption amount ratio, that is, a smaller desorption amount with respect to the adsorption amount, compared to the zeolite in each of Comparative Examples 2 to 4, and was able to store toluene up to a temperature of approximately 200°C, and to desorb toluene from the hydrocarbon adsorbent at a relatively high temperature of 200°C or higher. It was also confirmed that the hydrocarbon adsorbent in each of Examples 1, 2, and 4 had a higher peak intensity ratio in the X-ray diffraction spectrum compared to the zeolite in Comparative Example 1, maintained the crystal even after the heat treatment, and had excellent heat resistance. Note that zeolites generally have a low framework density (the total amount of Si and Al per unit volume), and the larger the amount of metal introduced, the lower the heat resistance. In contrast, MSE-type zeolites or EON-type zeolites, which are multipore zeolites, have a higher framework density than that of BEA-type zeolites or MFI-type zeolites, and thus are considered more heat resistant. It is considered that the peak intensity ratio of the hydrocarbon adsorbent in Example 3, although it is not measured, is at least higher than that of the BEA-type zeolite in Comparative Example 1. The reason is that the amount of metal is the same in Example 3 compared to Comparative Example 1, but the framework density is higher.

Example 5

The resulting MSE-type zeolite in an amount of 1 g was immersed in 10 g of a 1 mol/L ammonium chloride aqueous solution at 80°C, subjected to solid-liquid separation, and washed with deionized water to obtain an $NH_4$-type MSE-type zeolite. The resulting $NH_4$-type MSE-type zeolite in an amount of 1 g was immersed in 9.5 g of a 0.05 mol/L copper acetate (II) aqueous solution at 60°C, subjected to solid-liquid separation, and washed with deionized water to recover a wet powder. The resulting wet powder was dried at 100°C for 8 hours, and heat-treated at 550°C for 3 hours in an atmospheric atmosphere, thereby obtaining a Cu ion-exchanged MSE-type zeolite having a composition with the following molar ratios. The resulting Cu ion-exchanged MSE-type zeolite was used as a hydrocarbon adsorbent.

$$SiO_2/Al_2O_3 = 20$$

$$Cu/Al = 0.19$$

Example 6

An $NH_4$-type MSE-type zeolite was obtained in the same manner as in Example 5. A Cu ion-exchanged MSE-type zeolite was obtained in the same manner as in Example 5 except that 1 g of the resulting NH$_4$-type MSE-zeolite was immersed in 6 g of a 0.05 mol/L copper (II) acetate aqueous solution at 60°C. The resulting Cu ion-exchanged MSE-type zeolite had a composition with the following molar ratios. The resulting Cu ion-exchanged MSE-type zeolite was used as a hydrocarbon adsorbent.

$$SiO_2/Al_2O_3 = 20$$

$$Cu/Al = 0.15$$

Example 7

An NH$_4$-type MSE-type zeolite was obtained in the same manner as in Example 5. The resulting NH$_4$-type MSE-type zeolite in an amount of 1 g was immersed in 5.3 g of a 0.05 mol/L cesium carbonate aqueous solution, subjected to solid-liquid separation, and washed with deionized water to recover a wet powder. The resulting wet powder was dried at 100°C for 8 hours, and heat-treated at 550°C for 3 hours in an atmospheric atmosphere, thereby obtaining a Cs ion-exchanged MSE-type zeolite having a composition with the following molar ratios. The MSE-type zeolite was ion-exchanged with Cs and H. The resulting Cs-containing MSE-type zeolite was used as a hydrocarbon adsorbent.

$$SiO_2/Al_2O_3 = 20$$

$$Cs/Al = 0.07$$

Example 8

An NH$_4$-type MSE-type zeolite was obtained in the same manner as in Example 5. The resulting NH$_4$-type MSE-type zeolite in an amount of 1 g was immersed in 10 g of 0.1 mol/L sulfuric acid at 80°C, subjected to solid-liquid separation, and washed with deionized water to obtain an H-type MSE-type zeolite. The resulting H-type MSE-type zeolite in an amount of 1 g was immersed in 1 g of a 0.2 mol/L copper acetate (II) aqueous solution to recover a wet powder. The resulting wet powder was dried at 100°C for 8 hours, and heat-treated at 550°C for 3 hours in an atmospheric atmosphere, thereby obtaining a Cu ion-exchanged MSE-type zeolite having a composition with the following molar ratios. The resulting Cu ion-exchanged MSE-type zeolite was used as a hydrocarbon adsorbent.

$$SiO_2/Al_2O_3 = 22$$

$$Cu/Al = 0.21$$

Example 9

An NH$_4$-type MSE-type zeolite was obtained in the same manner as in Example 5. The resulting NH$_4$-type MSE-type zeolite in an amount of 1 g was immersed in 10 g of 1 mol/L sulfuric acid at 80°C, subjected to solid-liquid separation, and washed with deionized water to obtain an H-type MSE-type zeolite. The resulting H-type MSE-type zeolite in an amount of 1 g was immersed in 1 g of a 0.2 mol/L copper acetate (II) aqueous solution to recover a wet powder. The resulting wet powder was dried at 100°C for 8 hours, and heat-treated at 550°C for 3 hours in an atmospheric atmosphere, thereby obtaining a Cu ion-exchanged MSE-type zeolite having a composition with the following molar ratios. The resulting Cu ion-exchanged MSE-type zeolite was used as a hydrocarbon adsorbent.

$$SiO_2/Al_2O_3 = 58$$

$$Cu/Al = 0.50$$

Example 10

An NH4-type MSE-type zeolite was obtained in the same manner as in Example 5. The resulting NH4-type MSE-type zeolite in an amount of 1 g was immersed in 10 g of 3 mol/L sulfuric acid at 80°C, subjected to solid-liquid separation, and washed with deionized water to obtain an H-type MSE-type zeolite. The resulting H-type MSE-type zeolite in an amount of 1 g was immersed in 1 g of a 0.2 mol/L copper acetate (II) aqueous solution to recover a wet powder. The resulting wet powder was dried at 100°C for 8 hours, and heat-treated at 550°C for 3 hours in an atmospheric atmosphere, thereby obtaining a Cu ion-exchanged MSE-type zeolite having a composition with the following molar ratios. The resulting Cu ion-exchanged MSE-type zeolite was used as a hydrocarbon adsorbent.

$$SiO_2/Al_2O_3 = 76$$

$$Cu/Al = 0.70$$

Example 11

An NH4-type MSE-type zeolite was obtained in the same manner as in Example 5. The resulting NH4-type MSE-type zeolite in an amount of 1 g was immersed in 10 g of 5 mol/L sulfuric acid at 80°C, subjected to solid-liquid separation, and washed with deionized water to obtain an H-type MSE-type zeolite. The resulting H-type MSE-type zeolite in an amount of 1 g was immersed in 1 g of a 0.2 mol/L copper acetate (II) aqueous solution to recover a wet powder. The resulting wet powder was dried at 100°C for 8 hours, and heat-treated at 550°C for 3 hours in an atmospheric atmosphere, thereby obtaining a Cu ion-exchanged MSE-type zeolite having a composition with the following molar ratios. The resulting Cu ion-exchanged MSE-type zeolite was used as a hydrocarbon adsorbent.

$$SiO_2/Al_2O_3 = 181$$

$$Cu/Al = 1.65$$

Example 12

The resulting MSE-type zeolite in an amount of 1 g was immersed in 6.7 g of 6 mol/L sulfuric acid at 100°C, subjected to solid-liquid separation, and washed with deionized water to obtain an H-type MSE-type zeolite. The resulting H-type MSE-type zeolite in an amount of 1 g was suspended in 5.8 g of a 0.05 mol/L copper acetate (II) aqueous solution, and evaporated and dried to recover a wet powder. The resulting wet powder was dried at 100°C for 8 hours, and heat-treated at 550°C for 3 hours in an atmospheric atmosphere, thereby obtaining a Cu ion-exchanged MSE-type zeolite having a composition with the following molar ratios. The resulting Cu ion-exchanged MSE-type zeolite was used as a hydrocarbon adsorbent.

$$SiO_2/Al_2O_3 = 200$$

$$Cu/Al = 2.09$$

Example 13

The resulting MSE-type zeolite in an amount of 1 g was immersed in 6.7 g of 6 mol/L sulfuric acid at 100°C, subjected to solid-liquid separation, and washed with deionized water to obtain an H-type MSE-type zeolite. The resulting H-type MSE-type zeolite in an amount of 1 g was suspended so as to obtain 5.2 g of a mixed aqueous solution containing 0.03 mol/L gallium nitrate (III) and 0.015 mol/L platinum nitrate, and evaporated and dried to recover a wet powder. The resulting wet powder was dried at 100°C for 8 hours, and heat-treated at 550°C for 3 hours in an atmospheric atmosphere, thereby obtaining a Ga and Pt-containing MSE-type zeolite having a composition with the following molar ratios. The resulting Ga and Pt-containing MSE-type zeolite was used as a hydrocarbon adsorbent.

$$SiO_2/Al_2O_3 = 200$$

$$Ga/Al = 1.74$$

$$Pt/Al = 0.42$$

Example 14

The resulting MSE-type zeolite in an amount of 1 g was immersed in 6.7 g of 6 mol/L sulfuric acid at 100°C, subjected to solid-liquid separation, and washed with deionized water to obtain an H-type MSE-type zeolite. The resulting H-type MSE-type zeolite in an amount of 1 g was suspended in 11 g of a 0.05 mol/L tin acetate (II) aqueous solution, and evaporated and dried to recover a wet powder. The resulting wet powder was dried at 100°C for 8 hours, and heat-treated at 550°C for 3 hours in an atmospheric atmosphere, thereby obtaining a Sn-containing MSE-type zeolite having a composition with the following molar ratios. The resulting Sn-containing MSE-type zeolite was used as a hydrocarbon adsorbent.

$$SiO_2/Al_2O_3 = 200$$

$$Sn/Al = 0.93$$

Comparative Example 5

A commercially available H-type BEA-type zeolite ($SiO_2/Al_2O_3$ molar ratio of 37) in an amount of 1 g was suspended in 5 g of a 0.05 mol/L copper acetate (II) aqueous solution, and evaporated and dried to recover a wet powder. The resulting wet powder was dried at 100°C for 8 hours, and heat-treated at 550°C for 3 hours in an atmospheric atmosphere, thereby obtaining a Cu-containing BEA-type zeolite having a composition with the following molar ratios. The resulting Cu-containing BEA-type zeolite was used as a hydrocarbon adsorbent.

$$SiO_2/Al_2O_3 = 37$$

$$Cu/Al = 0.37$$

For the hydrocarbon adsorbent in each of Examples 5 to 14 and Comparative Example 5, the measurement sample was prepared, and the $SiO_2/Al_2O_3$ molar ratio, the Cu/Al ratio, and the Cs/Al ratio were measured in the same manner as in Examples 1 to 4 and Comparative Examples 1 to 4.

Ga/Al Ratio and Pt/Al Ratio

Using the above-mentioned scanning fluorescent X-ray analyzer, the Ga amount, the Pt amount, and the Al amount in the measurement sample were measured by elemental analysis to calculate the Ga/Al ratio and the Pt/Al ratio. In Example 13, the Ga amount was 1.9% by mass, the Pt amount was 1.3% by mass, the Ga/Al ratio was 1.74, and the Pt/Al ratio was 0.42. In Table 2, the total of the Ga amount and the Pt amount is described as the metal content ratio, and the total of the Ga/Al ratio and the Pt/Al ratio is described as the metal/Al ratio.

Sn/Al Ratio

Using the above-mentioned scanning fluorescent X-ray analyzer, the Sn amount and the Al amount in the measurement sample were measured by elemental analysis to calculate the Sn/Al ratio. In Table 2, the Sn amount is described as the metal content ratio, and the Sn/Al ratio is described as the metal/Al ratio.

Toluene Desorption Amount/Adsorption Amount Ratio

The hydrocarbon adsorbent in each of Examples 5 to 14 and Comparative Example 5 was heated from 50°C to 500°C by a temperature rising reaction method while circulating toluene and water, and the adsorption temperature, the desorption temperature, the adsorption amount, and the desorption amount of toluene were measured.
Specifically, using a fixed-bed flow-type reactor as a flow reactor, 0.1 g of the measurement sample of each hydrocarbon adsorbent was filled into in a quartz reaction tube of the flow reactor, and heated from 50°C to 500°C at a heating rate of 20°C/min by a temperature rising reaction method while circulating an evaluation gas with atmospheric atmosphere containing 71 ppm of toluene and 10% by volume of water vapor at a rate of 1 L/min, to adsorb and desorb toluene thereon. For the measurement of the adsorption and desorption of toluene on the zeolite, the decrease in the amount detected by a detector (VMS-1000F, manufactured by Shimadzu Corp.) arranged downstream with respect to the amount of toluene circulating was used as the adsorption amount and the purification amount. In the region where a value equal to or more than the amount of flow to the hydrocarbon adsorbent was detected, the adsorbed hydrocarbons were desorbed. The ratio ($ZD_2/ZD_1 \times 100$) of the total molar amount $ZD_2$ of toluene desorbed from the hydrocarbon adsorbent at 170°C or lower to the total molar amount $ZD_1$ of toluene adsorbed at 50°C or higher and lower than 170°C was used as the toluene desorption amount/adsorption amount ratio. The results are shown in Table 2.
The behavior of adsorption and desorption of toluene in the presence of water was complicated due to the occurrence of adsorption, desorption, and re-adsorption, and the behavior of adsorption, desorption, and re-adsorption differed depending on the $SiO_2/Al_2O_3$ ratio, the amount of metal, and the type of metal. Therefore, the evaluation was performed on the basis of 170°C, which was the temperature capable of comparing only the adsorption and desorption.

Measurement Conditions

Evaluation gas: 71 ppm of toluene and the balance being nitrogen ($N_2$); and
Atmosphere: An atmospheric atmosphere containing 10% by volume of water vapor ($H_2O$), prepared by evaporating water vapor from a tank containing water and adjusting saturated water vapor pressure with temperature.

BET Specific Surface Area

For the hydrocarbon adsorbent in each of Examples 5, 11, 13, 14, and Comparative Example 5, the BET specific surface area was calculated by the BET method from the nitrogen adsorption isotherm measured in accordance with ISO 9277 (JIS Z8330: 2013).

Heat Treatment, Toluene Desorption Amount/Adsorption Amount Ratio, Peak Intensity Ratio, and BET Specific Surface Area

The hydrocarbon adsorbent in each of Examples 12 to 14 and Comparative Example 5 was heat-treated under the conditions described above, and the toluene desorption amount/adsorption amount ratio, the peak intensity ratio in the X-ray diffraction spectrum, and the BET specific surface area were then measured under the conditions described above in the same manner as for the hydrocarbon adsorbent in Example 1.
In Comparative Example 5, no adsorption measurement was performed since it was confirmed by powder X-ray diffraction after the heat treatment that the framework structure of the BEA-type zeolite was not maintained.

[Table 2]

| | Produced zeolite | | | | | Evaluation | | | | | |
|---|---|---|---|---|---|---|---|---|---|---|---|
| | | | | | | Before heat treatment | Before and after heat treatment | Before and after heat treatment | Before heat treatment | After heat treatment | Before and after heat treatment |
| | Framework structure | $SiO_2/Al_2O_3$ molar ratio | Metal | Metal content ratio (mass %) | Metal / Al ratio | Toluene desorption amoun / adsorption amount ratio (mol %) | Toluene desorption amount / adsorption amount ratio (mol %) | Peak intensity ratio D/C | BET specific surface area ($m^2/g$) | BET specific surface area ($m^2/g$) | specific surface area ratio B/A |
| Example 5 | MSE | 20 | Cu | 2.0 | 0.19 | 0.4 | - | - | 470 | - | - |
| Example 6 | MSE | 20 | Cu | 1.7 | 0.15 | 0.5 | - | - | - | - | - |
| Example 7 | MSE | 20 | Cs | 1.5 | 0.07 | 0 | - | - | - | - | - |
| Example 8 | MSE | 22 | Cu | 1.9 | 0.21 | 3.2 | - | - | - | - | - |
| Example 9 | MSE | 58 | Cu | 1.7 | 0.50 | 8.4 | - | - | - | - | - |
| Example 10 | MSE | 76 | Cu | 1.8 | 0.70 | 14.3 | - | - | - | - | - |
| Example 11 | MSE | 181 | Cu | 1.9 | 1.65 | 13.1 | - | - | 450 | - | - |
| Example 12 | MSE | 200 | Cu | 2.2 | 209 | 2.1 | 45.7 | 0.60 | - | - | - |
| Example 13 | MSE | 200 | Ga, Pt | 3.2 | 2.16 | - | 16.5 | 3.20 | 560 | 470 | 0.84 |
| Example 14 | MSE | 200 | Sn | 1.7 | 0.93 | - | 35.4 | 0.77 | 470 | 252 | 0.53 |
| Comparative Example 5 | BEA | 37 | Cu | 2.0 | 0.37 | 16.7 | not adsorbed | 0 | 650 | - | - |

**EP 4 190 441 A1**

As shown in Table 2, it was confirmed that the hydrocarbon adsorbent (multipore zeolite containing a specific metal) in each of Examples 5 to 12 had a lower value of the toluene desorption amount/adsorption amount ratio, that is, a smaller desorption amount with respect to the adsorption amount, compared to the zeolite in Comparative Example 5, and was able to store toluene up to a temperature of approximately 170°C, which was more likely to evaluate the behavior of adsorption and desorption of toluene on the hydrocarbon adsorbent, and to desorb toluene from the hydrocarbon adsorbent at a relatively high temperature of 170°C or higher. It was also confirmed that the hydrocarbon adsorbent in each of Examples 12 to 14 was able to adsorb and desorb toluene even after the heat treatment, and had heat resistance. The zeolite in Comparative Example 5 adsorbed no toluene after the heat treatment.

As shown in Table 2, it was confirmed that the hydrocarbon adsorbent in each of Examples 12 to 14 had a higher peak intensity ratio in the X-ray diffraction spectrum compared to the zeolite in Comparative Example 5, maintained the crystal even after the heat treatment, and had excellent heat resistance.

As shown in Table 2, the hydrocarbon adsorbent in each of Examples 13 and 14 had a BET specific surface area ratio B/A before and after the heat treatment in a range of 0.5 or more and 0.9 or less, had little change in the structure of the multipore zeolite used in the hydrocarbon adsorbent before and after the heat treatment, maintained the structure, and had heat resistance.

INDUSTRIAL APPLICABILITY

The hydrocarbon adsorbent according to the present disclosure is capable of adsorbing hydrocarbons, storing the adsorbed hydrocarbons up to a relatively high temperature, and desorbing the adsorbed and stored hydrocarbons at a relatively high temperature at which the catalyst can be activated. Therefore, when the hydrocarbon adsorbent is used as a hydrocarbon adsorption portion of an exhaust gas purifying catalyst, the exhaust gas purification performance can be improved. The exhaust gas purifying catalyst using the hydrocarbon adsorbent can be suitably used for purifying exhaust gases emitted from internal-combustion engines of automatic four-wheel vehicles, motorcycles, and other vehicles.

EXPLANATIONS OF LETTERS OR NUMERALS

1: Substrate, 1a: Cell, 1b: Partition wall, 2: Hydrocarbon adsorption portion, 3: Purifying catalyst portion, 3a: First purifying catalyst portion, 3b: Second purifying catalyst portion, 10: Exhaust gas purifying catalyst (first exhaust gas purifying catalyst or second exhaust gas purifying catalyst), 20: Internal combustion engine, 30: Exhaust gas flow passage, 40, 50: Exhaust gas purifying catalyst, and 100, 200, 300: Exhaust gas purifying system.

**Claims**

1.  A hydrocarbon adsorbent comprising

    a multipore zeolite containing at least one metal selected from the group consisting of transition metals belonging to Groups 3 to 12 in the periodic table, amphoteric metals belonging to Groups 13 and 14 in the periodic table, alkali metals, and alkaline earth metals outside the zeolite framework,
    the hydrocarbon adsorbent having a content ratio of the metal of 9% by mass or less relative to the multipore zeolite containing the metal.

2.  The hydrocarbon adsorbent according to claim 1, wherein the multipore zeolite has a $SiO_2/Al_2O_3$ molar ratio of 10 or more and 600 or less.

3.  The hydrocarbon adsorbent according to claim 1 or 2, wherein the metal comprises at least one selected from the group consisting of Mn, Fe, Ni, Cu, Zn, Ga, Rh, Pd, Ag, Sn, Sc, and Pt.

4.  The hydrocarbon adsorbent according to any one of claims 1 to 3, having a metal/Al ratio, which is a molar ratio of the metal to Al contained in the multipore zeolite, in a range of 0.01 or more and 2.5 or less.

5.  The hydrocarbon adsorbent according to any one of claims 1 to 4, comprising

    large pore tunnel-type pores and small pore cages having a maximum ring with an 8 or less-membered ring, wherein the multipore zeolite has at least a portion of the metal present in the small pore cages.

**6.** The hydrocarbon adsorbent according to any one of claims 1 to 5, wherein the multipore zeolite comprises phosphorus.

**7.** The hydrocarbon adsorbent according to claim 6, wherein the phosphorus-containing multipore zeolite has a P/Al molar ratio of 0.4 or more and 1.1 or less.

**8.** The hydrocarbon adsorbent according to any one of claims 1 to 7, wherein the multipore zeolite has a BET specific surface area A thereof in a range of 400 $m^2$/g or more and 1,000 $m^2$/g or less.

**9.** The hydrocarbon adsorbent according to claim 8, wherein the multipore zeolite has a specific surface area ratio B/A of a BET specific surface area B thereof after being heat-treated to a BET specific surface area A thereof before being heat-treated, in a range of 0.35 or more and 1 or less, with the following heat treatment conditions (1) to (5):

(1) a temperature of 850°C;
(2) a time period of 25 hours;
(3) an atmospheric atmosphere containing 10% by volume of water vapor ($H_2O$), which is prepared by evaporating water vapor from a tank containing water and adjusting saturated water vapor pressure with temperature;
(4) a model gas flow mode using an ignition combustion and filling (FC) mode, which alternately flows the following model gas (5) at 3 L/min for 80 seconds and air at 3 L/min for 20 seconds; and
(5) a model gas having 3 L/min for the total of $C_3H_6$, $O_2$, and $N_2$, 70 mL/min for $C_3H_6$, 70 mL/min for $O_2$, and the balance for $N_2$.

**10.** The hydrocarbon adsorbent according to any one of claims 1 to 9, wherein the multipore zeolite comprises an MSE-type zeolite or an EON-type zeolite.

**11.** The hydrocarbon adsorbent according to claim 10, wherein the MSE-type zeolite has a peak intensity at a diffraction angle ($2\theta$) position of 21.7° $\pm$ 1.0°, which represents the (420) plane, in an X-ray diffraction spectrum, and has a peak intensity ratio D/C of a peak intensity D of the (420) plane thereof after being heat-treated to a peak intensity C of the (420) plane thereof before being heat-treated, in a range of 0.3 or more and 1.5 or less, with the following heat treatment conditions (1) to (5):

(1) a temperature of 850°C;
(2) a time period of 25 hours;
(3) an atmospheric atmosphere containing 10% by volume of water vapor ($H_2O$), which is prepared by evaporating water vapor from a tank containing water and adjusting saturated water vapor pressure with temperature;
(4) a model gas flow mode using an ignition combustion and filling (FC) mode, which alternately flows the following model gas (5) at 3 L/min for 80 seconds and air at 3 L/min for 20 seconds; and
(5) a model gas having 3 L/min for the total of $C_3H_6$, $O_2$, and $N_2$, 70 mL/min for $C_3H_6$, 70 mL/min for $O_2$, and the balance for $N_2$.

**12.** An exhaust gas purifying catalyst comprising a substrate, a hydrocarbon adsorption portion containing the hydrocarbon adsorbent according to any one of claims 1 to 11 on the substrate, and a purifying catalyst portion on the hydrocarbon adsorption portion.

**13.** The exhaust gas purifying catalyst according to claim 12, wherein the purifying catalyst portion comprises a first purifying catalyst portion containing at least one of Rh and Pt, and a second purifying catalyst portion containing at least one of Pd and Pt, and wherein the first purifying catalyst portion is arranged on the side of the hydrocarbon adsorption portion, and the second purifying catalyst portion is provided on the first purifying catalyst portion.

**14.** The exhaust gas purifying catalyst according to claim 13, wherein the first purifying catalyst portion comprises a cerium oxide-zirconium oxide composite oxide ($CeO_2$-$ZrO_2$) having a $CeO_2$ content in a range of 15% by mass or more and 30% by mass or less.

**15.** An exhaust gas purifying catalyst comprising a substrate, a hydrocarbon adsorption portion containing the hydrocarbon adsorbent according to any one of claims 1 to 11 and Rh on the substrate, and a purifying catalyst portion containing Pd on the hydrocarbon adsorption portion.

**16.** An exhaust gas purifying system comprising

an internal combustion engine,

a first exhaust gas purifying catalyst provided upstream in an exhaust gas flow passage connected to the internal combustion engine, and

a second exhaust gas purifying catalyst provided downstream from the first exhaust gas purifying catalyst in the exhaust gas flow direction in the exhaust gas flow passage,

wherein the second exhaust gas purifying catalyst comprises the exhaust gas purifying catalyst according to any one of claims 12 to 15, and

the second exhaust gas purifying catalyst has a content ratio of platinum group metals in a range of 0.1 g/L or more and 3.0 g/L or less relative to the volume of the second exhaust gas purifying catalyst.

**17.** An exhaust gas purifying system comprising

an internal combustion engine and

a single exhaust gas purifying catalyst provided in an exhaust gas flow passage connected to the internal combustion engine,

wherein the single exhaust gas purifying catalyst comprises the exhaust gas purifying catalyst according to any one of claims 12 to 15.

**18.** An exhaust gas purifying system comprising

an internal combustion engine and

a plurality of exhaust gas purifying catalysts provided in an exhaust gas flow passage connected to the internal combustion engine,

wherein among the plurality of exhaust gas purifying catalysts, a first exhaust gas purifying catalyst arranged most upstream in the exhaust gas flow direction comprises the exhaust gas purifying catalyst according to any one of claims 12 to 15.

**19.** A method for treating an exhaust gas comprising bringing a combustion exhaust gas containing hydrocarbons into contact with the exhaust gas purifying catalyst according to any one of claims 12 to 15 to adsorb the hydrocarbons to the exhaust gas purifying catalyst, and desorbing the hydrocarbons from the exhaust gas purifying catalyst at a temperature of 170°C or higher.

[FIG. 1]

[FIG. 2]

[FIG. 3]

[FIG. 4]

[FIG. 5]

[FIG. 6]

[FIG. 7]

[FIG. 8]

## INTERNATIONAL SEARCH REPORT

| International application No. |
|---|
| **PCT/JP2021/028102** |

**A.    CLASSIFICATION OF SUBJECT MATTER**

*B01J 20/18*(2006.01)i; *B01D 53/94*(2006.01)i; *B01J 21/06*(2006.01)i; *B01J 23/10*(2006.01)i; *C01B 39/48*(2006.01)i;
*F01N 3/24*(2006.01)i
FI:    B01J20/18 D; B01D53/94 280; B01J21/06 A; B01J23/10 A; C01B39/48; F01N3/24 E

According to International Patent Classification (IPC) or to both national classification and IPC

**B.    FIELDS SEARCHED**

Minimum documentation searched (classification system followed by classification symbols)

B01J20/18; B01D53/94; B01J21/06; B01J23/10; C01B39/48; F01N3/24

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| X | CN 107262145 A (ANHUI NALAN ENVIRONMENTAL PROTECTION TECHNOLOGY CO., LTD.) 20 October 2017 (2017-10-20)<br>claims 1-5, paragraphs [0021], [0076]-[0078], [0088] | 1-5, 8, 10 |
| Y | | 2-8, 10, 12-18 |
| A | | 9, 11, 19 |
| Y | JP 2014-43371 A (YOKOHAMA NATIONAL UNIVERSITY) 13 March 2014 (2014-03-13)<br>paragraphs [0002], [0010] | 2-8,10,12-18 |
| Y | WO 2017/188341 A1 (UNIZEO CO., LTD.) 02 November 2017 (2017-11-02)<br>paragraphs [0002]-[0003], [0023], [0026] | 2-8, 10, 12-18 |
| Y | WO 2019/172284 A1 (MITSUI MINING & SMELTING CO., LTD.) 12 September 2019 (2019-09-12)<br>claim 1, paragraphs [0021], [0036], [0039], fig. 1 | 6-8,10,12-18 |
| Y | JP 2004-209323 A (NISSAN MOTOR CO., LTD.) 29 July 2004 (2004-07-29)<br>claim 1, paragraphs [0003], [0046]-[0047] | 15-18 |

☑ Further documents are listed in the continuation of Box C.          ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **14 September 2021** | **05 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2021/028102**

**C. DOCUMENTS CONSIDERED TO BE RELEVANT**

| Category* | Citation of document, with indication, where appropriate, of the relevant passages | Relevant to claim No. |
|---|---|---|
| Y | JP 5-31359 A (NGK INSULATORS LIMITED) 09 February 1993 (1993-02-09) claims 4, 5, 11, paragraphs [0011]-[0014], [0032], fig. 1 (a) | 18 |
| A | WO 2019/168148 A1 (TOSOH CORPORATION) 06 September 2019 (2019-09-06) | 1-19 |
| A | JP 2009-520583 A (SUD-CHEMIE AG) 28 May 2009 (2009-05-28) | 1-19 |
| A | JP 10-263364 A (NGK INSULATORS LIMITED) 06 October 1998 (1998-10-06) | 1-19 |

Form PCT/ISA/210 (second sheet) (January 2015)

### INTERNATIONAL SEARCH REPORT
**Information on patent family members**

International application No.

**PCT/JP2021/028102**

| Patent document cited in search report | | | Publication date (day/month/year) | Patent family member(s) | | | Publication date (day/month/year) |
|---|---|---|---|---|---|---|---|
| CN | 107262145 | A | 20 October 2017 | (Family: none) | | | |
| JP | 2014-43371 | A | 13 March 2014 | (Family: none) | | | |
| WO | 2017/188341 | A1 | 02 November 2017 | US | 2019/0135647 | A1 | |
| | | | | paragraphs [0002]-[0003], [0038], [0041] | | | |
| | | | | EP | 3450397 | A1 | |
| | | | | CN | 109071247 | A | |
| WO | 2019/172284 | A1 | 12 September 2019 | (Family: none) | | | |
| JP | 2004-209323 | A | 29 July 2004 | (Family: none) | | | |
| JP | 5-31359 | A | 09 February 1993 | US | 5538698 | A | |
| | | | | claims, 1, 6, 10, column 4, lines 4-61, column 9, lines 20-22, fig. 1(a) | | | |
| | | | | EP | 638710 | A2 | |
| WO | 2019/168148 | A1 | 06 September 2019 | JP | 2019-150822 | A | |
| JP | 2009-520583 | A | 28 May 2009 | US | 2009/0082194 | A1 | |
| | | | | WO | 2007/079852 | A1 | |
| | | | | DE | 102005061713 | A1 | |
| | | | | CA | 2633749 | A1 | |
| | | | | KR | 10-2008-0093979 | A | |
| JP | 10-263364 | A | 06 October 1998 | US | 6171557 | B1 | |
| | | | | EP | 867218 | A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014519975 W